(19) Europäisches Patentamt
European Patent Office
Office européen des brevets

(11) **EP 3 960 826 A1**

(12) **EUROPEAN PATENT APPLICATION**
published in accordance with Art. 153(4) EPC

(43) Date of publication:
**02.03.2022 Bulletin 2022/09**

(21) Application number: **20795239.1**

(22) Date of filing: **17.04.2020**

(51) International Patent Classification (IPC):
*C09J 11/06* (2006.01)     *C09J 11/08* (2006.01)
*C09J 167/00* (2006.01)     *C09J 7/38* (2018.01)
*C08G 63/12* (2006.01)

(52) Cooperative Patent Classification (CPC):
**C08G 63/12; C09J 7/38; C09J 11/06; C09J 11/08;
C09J 167/00**

(86) International application number:
**PCT/JP2020/016806**

(87) International publication number:
**WO 2020/218174 (29.10.2020 Gazette 2020/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **23.04.2019   JP 2019082323
30.08.2019   JP 2019158396
08.11.2019   JP 2019203095**

(71) Applicant: **Mitsubishi Chemical Corporation
Chiyoda-ku
Tokyo 100-8251 (JP)**

(72) Inventor: **SUZUKI, Hideaki
Tokyo 100-8251 (JP)**

(74) Representative: **Kuhnen & Wacker
Patent- und Rechtsanwaltsbüro PartG mbB
Prinz-Ludwig-Straße 40A
85354 Freising (DE)**

(54) **ADHESIVE AND ADHESIVE SHEET**

(57)   An adhesive agent is provided, which is produced by using a global environment-friendly and plant-derived material, and is excellent in adhesive properties, processability, dent resistance, and transparency. The adhesive agent is an adhesive agent produced by crosslinking an adhesive agent composition containing a polyester resin (i) having a structural portion derived from a polycarboxylic acid compound (a) and a structural portion derived from a polyol component (b), wherein the polyester resin (i) contains a structural portion derived from at least one selected from the group consisting of a dimer acid compound, a sebacic acid compound, and a dimer diol in a proportion of not less than 60 wt.% based on the weight of the polyester resin (i), wherein the polyol component (b) includes a glycol (b1) having an even carbon number (excluding the dimer diol), wherein the polyester resin (i) has an ester group concentration of not less than 2 mmol/g. The adhesive agent has an adhesive force ($\alpha$) of not less than 1 N/25 mm as measured under predetermined conditions.

**Description**

TECHNICAL FIELD

The present disclosure relates to a polyester adhesive agent and an adhesive sheet. More specifically, the present disclosure relates to an adhesive agent which is produced by using a global environment-friendly and plant-derived material, and is excellent in adhesive properties with respect to a variety of adherends such as metals and plastics, and in processability, dent resistance, and transparency. The present disclosure further relates to an adhesive sheet.

BACKGROUND ART

In recent years, adhesive agents are used for bonding components from the viewpoint of size reduction and weight reduction of products. An adhesive agent prepared by using a polyester resin and having an excellent adhesive force is also under consideration as such an adhesive agent.

On the other hand, it is recommended to use plant-derived materials as renewable resources in order to cope with recent global warming, depletion of fossil resources, and the like. To this end, there is a demand for an adhesive agent prepared by using a global environment-friendly and plant-derived material and having a higher bioplastic degree.

In PTL 1, a less moisture-permeable adhesive sheet is disclosed, which includes an adhesive agent layer formed from such a polyester adhesive agent prepared by using a plant-derived material, and having a moisture permeability of not greater than 200 $g/m^2$. The polyester adhesive agent essentially contains a polyester polymer prepared through a condensation reaction between a plant-derived dicarboxylic acid and a plant-derived diol and having alkyl groups in side chains of its molecule.

In PTL 2, an adhesive sheet is disclosed, which is produced by using a polyester containing at least a lactic acid unit, a dibasic acid unit having a dimer acid moiety, and a glycol unit, and having a weight-average molecular weight of 20,000 to 300,000, a hydroxyl group value of 1 to 100 mg KOH/g, and a glass transition temperature of -70°C to -20°C as measured at a temperature increasing rate of 20°C/minute by means of a differential scanning calorimeter.

The ordinary polyester resins are crystalline resins. Therefore, it is important to eliminate the crystallinities of the polyester resins for use in the adhesive agent field.

RELATED ART DOCUMENTS

PATENT DOCUMENTS

PTL 1: JP-A-2007-308626
PTL 2: JP-A-2010-37463

SUMMARY

In the art disclosed in PTL 1, however, a long-chain alkyl-based material is used, and the resulting polyester resin per se is very soft. Therefore, the polyester adhesive agent is environment-friendly with a higher bioplastic degree. However, the polyester adhesive agent is soft, and has a very poor handlability when a narrow adhesive sheet strip is produced by using the polyester adhesive agent. In addition, the polyester resin per se is too soft, making it difficult to properly form an uncrosslinked adhesive sheet. Further, the polyester adhesive agent is poorer in dent resistance. Therefore, the polyester adhesive agent needs further improvement in order to satisfy the requirements for the environmental friendliness and the adhesive properties.

Where the adhesive sheet is used for fixing a display protection member (e.g., a cover glass) of a mobile electronic apparatus, for example, it is very important to form the adhesive sheet into a narrow adhesive sheet strip from the viewpoint of the size increase of an information display portion, the improvement of design quality, the improvement of design flexibility, and the like.

Where the adhesive sheet is formed into the narrow adhesive sheet strip, it is difficult to handle the adhesive sheet strip. That is, the narrow adhesive sheet strip has a reduced surface area. However, even if the adhesive sheet strip is provided with a separator film, the area of exposed side surfaces of the adhesive agent layer of the adhesive sheet strip is unchanged. This makes it difficult to handle the adhesive sheet strip. Further, when the narrow adhesive sheet strip is formed by slitting the adhesive sheet to a smaller slit width, the adhesive agent layer is problematically liable to be stretched by a slit blade. This disadvantageously affects the properties of the adhesive sheet, and reduces the processability and the workability with the adhesive agent adhering to the blade.

The adhesive sheet for the narrow adhesive sheet strip to be used for the display protection member of the mobile electronic apparatus is required to be free from the stickiness of the side surfaces thereof and, when being slit, is required to be substantially free from the deformation of the adhesive agent layer and the adhesion of the adhesive agent to the blade. Further, the adhesive agent layer is required to be excellent in dent resistance without dents due to external forces, and to be excellent in transparency to make it possible to detect abnormalities such as inclusion of foreign matter.

In the art disclosed in PTL 2, the adhesive agent is environment-friendly with a higher bioplastic degree, but is still insufficient in adhesive properties with respect to the adherends. Particularly, the adhesive agent is insufficient in balance between holding force and adhesive force for double-sided tapes and the like, and is still unsatisfactory in adhesive properties with respect to poor adhesion adherends such as plastic substrates, particularly polyolefin substrates. The adhesive agent still needs further improvement.

The polylactic acid polyester disclosed in PTL 2 is a promising plant-derived material, but is susceptible to hydrolysis. This makes it very difficult to use the polylactic acid polyester in the adhesive agent field which requires a higher moist heat durability, disinclining to use the polylactic acid polyester.

In view of the foregoing, the present disclosure provides an adhesive agent which is produced by using a global environment-friendly and plant-derived material, and yet is excellent in adhesive properties with respect to a variety of adherends and in processability, dent resistance, and transparency, and further provides an adhesive sheet.

The inventor found that, where a polyester resin having a higher bioplastic degree is prepared by using at least one plant-derived material such as a dimer acid compound, a sebacic acid compound and/or a dimer diol and an adhesive agent is produced by crosslinking an adhesive agent composition containing the polyester resin, the adhesive agent can be imparted with global environment friendliness, excellent adhesive properties with respect to a variety of adherends, excellent processability and excellent dent resistance for adhesive sheet slitting, and excellent transparency by using a glycol component having an even carbon number as a polyol component of the polyester resin, and increasing the ester group concentration of the polyester resin to set a predetermined adhesive force to a higher level.

According to a first aspect of the present disclosure, there is provided an adhesive agent produced by crosslinking an adhesive agent composition containing a polyester resin (i) having a structural portion derived from a polycarboxylic acid compound (a) and a structural portion derived from a polyol component (b), wherein the polyester resin (i) contains a structural portion derived from at least one selected from the group consisting of a dimer acid compound, a sebacic acid compound, and a dimer diol in a proportion of not less than 60 wt.% based on the weight of the polyester resin (i), wherein the polyol component (b) includes a glycol (b1) having an even carbon number (excluding the dimer diol), wherein the polyester resin (i) has an ester group concentration of not less than 2 mmol/g, the adhesive agent having an adhesive force ($\alpha$) of not less than 1 N/25 mm as measured as a 180-degree peel strength (N/25 mm) by forming an adhesive agent layer of the adhesive agent on a substrate to provide an adhesive sheet, bonding the adhesive sheet to an adherend of a bright annealed stainless steel plate, allowing the resulting structure to stand still at 23°C at 50%RH for 30 minutes, and peeling the adhesive sheet from the adherend at a peel rate of 300 mm/minute.

According to a second aspect of the present disclosure, there is provided an adhesive agent produced by crosslinking an adhesive agent composition containing a polyester resin (ii) having a bioplastic degree of not less than 60%, wherein the polyester resin (ii) has a structural portion derived from a polycarboxylic acid compound (a) and a structural portion derived from a polyol component (b), and the polyol component (b) includes a glycol (b1) having an even carbon number (excluding a dimer diol), wherein the polyester resin (ii) has an ester group concentration of not less than 2 mmol/g, the adhesive agent having an adhesive force ($\alpha$) of not less than 1 N/25 mm as measured as a 180-degree peel strength (N/25 mm) by forming an adhesive agent layer of the adhesive agent on a substrate to provide an adhesive sheet, bonding the adhesive sheet to an adherend of a bright annealed stainless steel plate, allowing the resulting structure to stand still at 23°C at 50%RH for 30 minutes, and then peeling the adhesive sheet from the adherend at a peel rate of 300 mm/minute.

According to a third aspect of the present disclosure, there is provided an adhesive sheet including an adhesive agent layer containing the adhesive agent according to the first aspect or the second aspect.

In general, the long-chain alkyl-based material is often used as the higher-bioplastic degree material, and examples of the long-chain alkyl-based material include sebacic acid derived from castor oil, dimer acid derived from oleic acid, and dimer diol prepared by using the dimer acid. For example, sebacic acid is a monomer that provides a polyester resin having a very high crystallinity. Therefore, the sebacic acid-derived polyester resin is used as a crystalline polyester resin. On the other hand, the dimer acid and the dimer diol are monomers that are used for imparting the resin with softness and water resistance. For the improvement of the properties of the resin, the resin preferably has the lowest possible ester group concentration. Therefore, it is preferred to reduce the ester group concentration to the lowest possible level.

Where the adhesive agent is produced with the use of the polyester resin, it is generally necessary to reduce the glass transition temperature of the resin. Therefore, the crystallinity of the resin is generally eliminated by using an alkyldicarboxylic acid and a glycol material containing an alkyl having a carbon number of not less than 5, e.g., a branched glycol such as neopentyl glycol (having a carbon number of 5), and the resin is generally softened by using a relatively long-chain glycol such as 1,6-hexanediol (having a carbon number of 6). These glycol materials make it possible to eliminate the crystallinity of the polyester resin and hence to reduce the glass transition temperature, thereby improving the adhesive force. Where a glycol having a smaller carbon number, i.e., a glycol having a carbon number of not greater than 4, is used, the polyester resin is liable to have an insufficient softness and, hence, insufficient adhesive properties. In general, therefore, it is not considered suitable to use the glycol having a carbon number of not greater than 4 as a major component.

In the present disclosure, in contrast, it is unexpectedly possible to provide a higher-bioplastic degree polyester resin which is designed so as to have a higher degree of molecular alignment to be virtually free from crystallization by using a glycol having an even carbon number as the polyol component, and has a higher ester group concentration while using a plant-derived long-chain monomer. Thus, the object of the present disclosure is attained.

Where the adhesive agent is produced by using the polyester resin prepared with the use of the dimer acid and the dimer diol as major components, for example, the polyester resin is very soft due to the influence of the long-chain alkyl group present in the main chain and the side chain, and is significantly poor in dent resistance during production of an adhesive sheet and in processability for slitting the adhesive sheet to a required size. In the present disclosure, the polyester resin is softened by using the dimer acid and optionally using sebacic acid, while the ester bond (hard portion) concentration of the polyester resin is significantly increased, for example, by using a smaller glycol such as ethylene glycol or 1,4-butanediol as the glycol. Thus, the adhesive agent produced by using the polyester resin is improved in dent resistance and processability.

Where a glycol component having an even carbon number such as ethylene glycol or 1,4-butanediol is used, the resulting polyester resin is supposedly liable to have a structure with its polymer chains partly aligned and have an increased internal cohesive force, as compared with a case where a glycol component having an odd carbon number such as 1,3-propanediol is used. As a result, the adhesive agent supposedly has a higher adhesive force necessary for a double-sided tape.

The adhesive agent of the present disclosure is the adhesive agent produced by crosslinking the adhesive agent composition containing the polyester resin (i) having the structural portion derived from the polycarboxylic acid compound (a) and the structural portion derived from the polyol component (b). The polyester resin (i) contains the structural portion derived from at least one selected from the group consisting of the dimer acid compound, the sebacic acid compound, and the dimer diol in a proportion of not less than 60 wt.% based on the weight of the polyester resin (i). The polyol component (b) includes the even carbon number glycol (b1) (excluding the dimer diol). The polyester resin (i) has an ester group concentration of not less than 2 mmol/g. The adhesive agent has an adhesive force ($\alpha$) of not less than 1 N/25 mm as measured under the above conditions. Therefore, the adhesive agent is global environment-friendly with a higher bioplastic degree, and yet the polyester resin contained in the adhesive agent has a higher ester group concentration. Therefore, the adhesive agent is excellent in adhesive properties with respect to a variety of adherends, processability and dent resistance for adhesive sheet slitting, and transparency.

Accordingly, the adhesive agent can be advantageously used for a single-sided or double-sided adhesive sheet for bonding optical components, and for a single-sided or double-sided adhesive sheet for fixing components of mobile electronic apparatuses and fixing electronic components.

Where the even carbon number glycol (b1) is an aliphatic glycol having a straight chain structure, the adhesive agent is well-balanced between the crystallinity and the cohesive force.

Where the polycarboxylic acid compound (a) contains a straight chain carboxylic acid compound (a1) in a proportion of not greater than 70 mol %, the adhesive agent is well-balanced between the crystallinity and the cohesive force.

Where the even carbon number glycol (b1) is present in a proportion of 10 to 100 mol % in the polyol component (b), the adhesive agent is more excellent in adhesive force.

Where the even carbon number glycol (b1) is a polyol having a carbon number of not greater than 4, the adhesive agent is excellent in production stability.

Where the polyester resin (i) has an acid value of not greater than 10 mg KOH/g, the adhesive agent is excellent in durability.

Where the polyester resin (i) has a bioplastic degree of not less than 60%, the adhesive agent is more friendly to global environment.

The adhesive agent of the present disclosure is the adhesive agent produced by crosslinking the adhesive agent composition containing the polyester resin (ii) having a bioplastic degree of not less than 60%. The polyester resin (ii) has the structural portion derived from the polycarboxylic acid compound (a) and the structural portion derived from the polyol component (b), and the polyol component (b) includes the even carbon number glycol (b1) (excluding a dimer diol). The polyester resin (ii) has an ester group concentration of not less than 2 mmol/g. The adhesive agent has an adhesive force ($\alpha$) of not less than 1 N/25 mm as measured under the above conditions. Therefore, the adhesive agent is global environment-friendly with a higher bioplastic degree, and yet the polyester resin contained in the adhesive agent has a higher ester group concentration. Hence, the adhesive agent is excellent in adhesive properties with respect to a variety of adherends, processability and dent resistance for adhesive sheet slitting, and transparency.

Accordingly, the adhesive agent can be advantageously used for a single-sided or double-sided adhesive sheet for bonding optical components, and for a single-sided or double-sided adhesive sheet for fixing components of mobile electronic apparatuses and fixing electronic components.

Where the adhesive agent composition further contains a hydrolysis inhibitor (iii), the adhesive agent is excellent in long-term durability.

Where the adhesive agent composition further contains a crosslinking agent (iv), the adhesive agent is more excellent in adhesive force.

Where the adhesive agent composition further contains a tackifier resin (vii), the adhesive agent is more excellent in adhesive properties.

Where the adhesive agent has a bioplastic degree of not less than 60%, the adhesive agent is more friendly to global environment.

DESCRIPTION OF EMBODIMENTS

Preferred embodiments of the present disclosure will hereinafter be described in detail by way of example.

In the present disclosure, the term "carboxylic acid compound" means to include carboxylic acids as well as carboxylic acid derivatives such as hydrogenation products of carboxylic acids, carboxylic acid salts, carboxylic acid anhydrides, carboxylic acid halides, and carboxylic acid esters.

An adhesive agent composition to be used for production of an adhesive agent of the present disclosure contains a polyester resin (i) having a structural portion derived from a polycarboxylic acid compound (a) and a structural portion derived from a polyol component (b). The polyester resin (i) contains a structural portion derived from at least one selected from the group consisting of a dimer acid compound, a sebacic acid compound, and a dimer diol in a proportion of not less than 60 wt.% based on the weight of the polyester resin (i). The polyol component (b) includes a glycol (b1) having an even carbon number (excluding the dimer diol). The polyester resin (i) has an ester group concentration of not less than 2 mmol/g.

An adhesive agent composition to be used for production of another adhesive agent of the present disclosure contains a polyester resin (ii) having a bioplastic degree of not less than 60%. The polyester resin (ii) has a structural portion derived from a polycarboxylic acid compound (a) and a structural portion derived from a polyol component (b). The polyol component (b) includes a glycol (b1) having an even carbon number (excluding a dimer diol). The polyester resin (ii) has an ester group concentration of not less than 2 mmol/g.

The respective components of the adhesive agent compositions to be used in the present disclosure will hereinafter be described in turn.

<Polyester Resins (i) and (ii)>

The polyester resins (i) and (ii) to be used in the present disclosure each contain the structural portion derived from the polycarboxylic acid compound (a) and the structural portion derived from the polyol component (b), and are each prepared, for example, by copolymerizing copolymerization components including the polycarboxylic acid compound (a) and the polyol component (b).

[Polycarboxylic Acid Compound (a)]

In the present disclosure, a plant-derived polycarboxylic acid compound is preferably used in order to increase the bioplastic degree.

Examples of the plant-derived polycarboxylic acid compound include sebacic acid compounds derived from castor oil, dimer acid compounds (mainly having a carbon number of 36 or 44) derived from oleic acid, linoleic acid, linolenic acid, and erucic acid, and succinic acid compounds derived from glucose. The dimer acid compounds may include dimer acid compounds derived from beef tallow in addition to the plant-derived dimer acid compounds.

Of these polycarboxylic acid compounds, a straight chain carboxylic acid compound (a1) is preferably used as the polycarboxylic acid compound (a) because of easy availability of its raw material and easy production thereof. The straight chain carboxylic acid compound (a1) preferably has a carbon number of 4 to 12, more preferably 6 to 10. Particularly, the sebacic acid compounds are preferred for reduction of the glass transition temperature and for easy control of the adhesive properties.

The polyester resins (i) and (ii) to be used in the present disclosure preferably each contain the structural portion derived from the polycarboxylic acid compound (a), and the polycarboxylic acid compound (a) preferably contains the straight chain carboxylic acid compound (a1) in a proportion of not greater than 70 mol %, particularly preferably 5 to 70 mol %, more preferably 10 to 60 mol %. If the proportion of the straight chain carboxylic acid compound (a1) is excessively great, the crystallinity is liable to increase. If the proportion of the straight chain carboxylic acid compound (a1) is excessively small, the production stability tends to be reduced.

A dimer acid compound (a2) is preferably used as the polycarboxylic acid compound (a) for easy prevention of the crystallization of the polyester resin, and a hydrogenation product of dimer acid is more preferred as the polycarboxylic acid compound (a).

The polycarboxylic acid compound (a) preferably contains the dimer acid compound (a2) in a proportion of not less than 40 mol %, particularly preferably not less than 50 mol %, more preferably not less than 60 mol %, based on the amount of the polycarboxylic acid compound (a). The upper limit of the proportion of the dimer acid compound (a2) is typically 100 mol %. If the proportion of the dimer acid compound (a2) is excessively small, the crystallinity is liable to increase.

The straight chain carboxylic acid compound (a1) and the dimer acid compound (a2) are preferably used in combination as the polycarboxylic acid compound (a). In this case, the molar ratio between the straight chain carboxylic acid compound (a1) and the dimer acid compound (a2) is preferably (a1):(a2) = 1:99 to 90:10, more preferably 5:95 to 60:40, particularly preferably 10:90 to 50:50.

A polycarboxylic acid compound other than those described above may be used, as long as the object of the present disclosure is not impaired.

Examples of the other polycarboxylic acid compound include: aliphatic dicarboxylic acid compounds such as malonic acid compound, dimethylmalonic acid compound, glutaric acid compound, adipic acid compound, trimethyladipic acid compound, pimelic acid compound, 2,2-dimethylglutaric acid compound, azelaic acid compound, fumaric acid compound, maleic acid compound, itaconic acid compound, thiodipropionic acid compound, diglycolic acid compound, and 1,9-nonanedicarboxylic acid compound; aromatic dicarboxylic acid compounds such as phthalic acid compound, terephthalic acid compound, isophthalic acid compound, benzylmalonic acid compound, diphenic acid compound, and 4,4'-oxydibenzoic acid compound, and naphthalenedicarboxylic acid compounds such as 1,8-naphthalenedicarboxylic acid compound, 2,3-naphthalenedicarboxylic acid compound, and 2,7-naphthalenedicarboxylic acid compound,; alicyclic dicarboxylic acid compounds such as 1,3-cyclopentanedicarboxylic acid compound, 1,2-cyclohexanedicarboxylic acid compound, 1,3-cyclopentanedicarboxylic acid compound, 1,4-cyclohexanedicarboxylic acid compound, 2,5-norbornanedicarboxylic acid compound, and adamantanedicarboxylic acid compound; and trivalent and higher valent carboxylic acid compounds such as trimellitic acid compound, pyromellitic acid compound, adamantanetricarboxylic acid compound, and trimesic acid compound.

These polycarboxylic acid compounds may be used alone or in combination as the polycarboxylic acid compound (a).

[Polyol Component (b)]

In the present disclosure, a plant-derived polyol component is preferably used in order to increase the bioplastic degree.

Examples of the plant-derived polyol component include: fatty acid ester diols derived from castor oil; dimer diols prepared by diolization of dimer acid compounds (mainly having a carbon number of 36 or 44) derived from oleic acid, linoleic acid, linolenic acid, erucic acid, and the like, and hydrogenation products of these dimer acid compounds; and bio-based ethylene glycol, bio-based propylene glycol, and bio-based butylene glycol. Of these, the bio-based ethylene glycol and the bio-based propylene glycol (1,3-propanediol) are preferred for increasing the ester group concentration, and the bio-based ethylene glycol is particularly preferred.

In the present disclosure, it is necessary to use the even carbon number glycol (b1) (excluding the dimer diol) in order to eliminate the crystallinity and increase the molecular alignment for the cohesive force.

Examples of the even carbon number glycol (b1) include: aliphatic glycols including aliphatic glycols having a straight chain structure such as ethylene glycol, diethylene glycol, 1,4-butanediol, 1,6-hexanediol, 1,8-octanediol, 1,10-decanediol, and 1,12-dodecanediol, and aliphatic glycols having a branched structure such as 1,2-butanediol, 1,3-butanediol, dipropylene glycol, 2,4-dimethyl-2-ethylhexane-1,3-diol, 2-methyl-1,3-propanediol, and 3-methyl-1,5-pentanediol; alicyclic glycols such as 1,2-cyclohexanedimethanol, 1,3-cyclohexanedimethanol, 1,4-cyclohexanedimethanol, tricyclodecanedimethanol, adamantanediol, and 2,2,4,4-tetramethyl-1,3-cyclobutanediol; and aromatic glycols such as 4,4'-thiodiphenol, bisphenol-S, 4,4'-dihydroxybiphenyl, o-, m-and p-dihydroxybenzene, 2,5-naphthalenediol, and p-xylenediol, and ethylene oxide adducts and propylene oxide adducts of these aromatic glycols.

The even carbon number glycol (b1) is preferably a plant-derived glycol.

Of the even carbon number glycols described above, the aliphatic glycols are preferred as the even carbon number glycol (b1), and the straight chain aliphatic glycols are particularly preferred from the viewpoint of the balance between the crystallinity and the cohesive force.

For the increased ester bond concentration and the stable production, it is preferred to use a glycol having a carbon number of not greater than 4 as the even carbon number glycol (b1), and it is particularly preferred to use a glycol having a carbon number of 2.

Specific preferred examples of the even carbon number glycol (b1) to be used in the present disclosure include aliphatic glycols having a straight chain structure and a carbon number of not greater than 4 such as ethylene glycol, diethylene glycol, and 1,4-butanediol. Of these, ethylene glycol and 1,4-butanediol are preferred, and ethylene glycol is particularly preferred.

In the present disclosure, the proportion of the even carbon number glycol (b1) is preferably 10 to 100 mol %, particularly preferably 30 to 99.9 mol %, more preferably 50 to 99.7 mol %, especially preferably 70 to 99.6 mol %, based on the overall amount of the polyol component (b). If the proportion of the even carbon number glycol (b1) is excessively small, the adhesive properties tend to be poorer.

In the present disclosure, a polyol component other than the even carbon number glycol (b1) may be used as the polyol component (b), as long as the object of the present disclosure is not impaired.

Examples of the polyol component (b) other than the even carbon number glycol (b1) include glycols having an odd carbon number, and trivalent and higher valent polyalcohols.

Examples of the odd carbon number glycols include: aliphatic glycols including aliphatic glycols having a straight chain structure such as 1,3-propanediol, 1,5-pentanediol, and 1,9-nonanediol, and aliphatic glycols having a branched structure such as 2,2-dimethyl-1,3-propanediol (neopentyl glycol), 2-ethyl-2-butyl-1,3-propanediol, 2-ethyl-2-isobutyl-1,3-propanediol, and 2,2,4-trimethyl-1,6-hexanediol; alicyclic glycols such as spiro glycols; and aromatic glycols such as 4,4'-methylenediphenol, bisphenol-A, and bisphenol fluorene, and ethylene oxide adducts and propylene oxide adducts of these aromatic glycols.

Examples of the trivalent and higher valent polyalcohols include pentaerythritol, dipentaerythritol, tripentaerythritol, glycerin, trimethylolpropane, trimethylolethane, 1,3,6-hexanetriol, and adamantanetriol.

Of these, the odd carbon number glycols are preferred for elimination of the crystallinity and for improvement of solution stability. The branched aliphatic glycols are more preferred, and 2,2-dimethyl-1,3-propanediol (neopentyl glycol) and 2-ethyl-2-isobutyl-1,3-propanediol are particularly preferred for versatility.

Where the polycarboxylic acid compound (a) has a higher bioplastic degree, a non-plant-derived polyol component may be used as the polyol component (b) for easy polycondensation. Even in this case, however, the polyol having a carbon number of not greater than 4 is preferably used in order to increase the bioplastic degree, and the polyol having a carbon number of 2 is particularly preferably used. That is, where the polyol having a carbon number of not greater than 4 is used as the polyol component (b), the weight ratio of the polycarboxylic acid compound

(a) having a higher bioplastic degree is increased in the polyester resin (i), (ii), thereby making it possible to increase the bioplastic degrees of the polyester resin (i), (ii). Specific examples of the polyol having a carbon number of not greater than 4 include ethylene glycol and 1,4-butanediol.

The polyol components described above may be used alone or in combination as the polyol component (b).

In addition to the polyol component (b) and the polycarboxylic acid compound (a), a compound containing a carboxylic acid group and a hydroxyl group in its molecule (e.g., lactic acid or the like) may be used, as long as the effects of the present disclosure are not impaired. However, lactic acid is susceptible to hydrolysis and, therefore, it is not preferred to use lactic acid.

The polyester resins (i) and (ii) to be used in the present disclosure each have a higher bioplastic degree. To this end, at least one selected from the group consisting of the dimer acid compound, the sebacic acid compound, and the dimer diol is preferably contained in a proportion of not less than 60 wt.%, more preferably not less than 65 wt.%, still more preferably not less than 70 wt.%, particularly preferably not less than 80 wt.%, based on the total weight of the copolymerization components of the polyester resin (i), (ii). The upper limit of the proportion is 100 wt.%. If the proportion is small, the polyester resin (i), (ii) is liable to have a lower bioplastic degree and, therefore, reduction in environmental load tends to be insufficient.

[Production of Polyester Resins (i) and (ii)]

In the present disclosure, the polyester resins (i) and (ii) can be each produced through a polycondensation reaction of the polycarboxylic acid compound (a) and the polyol component (b) in the presence of a catalyst by a known method. First, an esterification reaction or an ester exchange reaction is allowed to proceed, and then the polycondensation reaction is allowed to proceed. Where it is not necessary to increase the molecular weight of the polyester resin (i), (ii), the polyester resin (i), (ii) may be produced only by the esterification reaction or the ester exchange reaction.

For the esterification reaction or the ester exchange reaction, the catalyst is generally used. Specific examples of the catalyst include: titanium-containing catalysts such as tetraisopropyl titanate and tetrabutyl titanate; antimony-containing catalysts such as antimony trioxide; germanium-containing catalysts such as germanium dioxide; and zinc acetate, manganese acetate, and dibutyl tin oxide. These may be used alone or in combination. Of these, antimony trioxide, tetrabutyl titanate, germanium dioxide, and zinc acetate are preferred for balance between the activity of the catalyst and the hue of the reaction product.

The amount of the catalyst to be used is preferably 1 to 10,000 ppm, particularly preferably 10 to 5,000 ppm, more preferably 20 to 3,000 ppm, based on the total amount (total weight) of the copolymerization components. If the amount of the catalyst is excessively small, the polymerization reaction tends to insufficiently proceed. If the amount of the catalyst is excessively great, side reactions are liable to occur without reduction in reaction period and other advantages.

The reaction temperature for the esterification reaction is preferably 200°C to 300°C, particularly preferably 210°C to 280°C, more preferably 220°C to 260°C. If the reaction temperature is excessively low, the reaction tends to insufficiently proceed. If the reaction temperature is excessively high, side reactions such as decomposition are liable to occur. The reaction pressure is typically an ordinary pressure.

After the esterification reaction or the ester exchange reaction, the polycondensation reaction is allowed to proceed at a reaction temperature of 220°C to 280°C, particularly preferably 230°C to 270°C by using the same catalyst in substantially the same amount as used for the esterification reaction or the ester exchange reaction and by gradually reducing the pressure of the reaction system to a final pressure of not higher than 5 hPa. If the reaction temperature is excessively low, the reaction tends to insufficiently proceed. If the reaction temperature is excessively high, side reactions such as decomposition are liable to occur.

Thus, the polyester resin (i), (ii) to be used in the present disclosure is produced.

In order to increase the bioplastic degree of the polyester resin (i) to be used in the present disclosure, it is important that the structural portion derived from at least one selected from the group consisting of the dimer acid compound, the sebacic acid compound, and the dimer diol is contained in a proportion of not less than 60 wt.%, preferably not less than 65 wt.%, more preferably not less than 70 wt.%, particularly preferably not less than 80 wt.%, based on the weight of the polyester resin (i). The upper limit of the proportion is 100 wt.%. If the proportion of the structural unit is small, the polyester resin (i) is liable to have a lower bioplastic degree, resulting in insufficient reduction in environmental load.

The polyester resin (i), (ii) typically has an ester group concentration of not less than 2 mmol/g, preferably 2.5 to 10 mmol/g, more preferably 2.7 to 7 mmol/g, particularly preferably 3 to 5 mmol/g. If the ester group concentration is excessively small, the polyester resin tends to be softened to be poorer in dent resistance and processibility.

Exemplary methods of adjusting the ester group concentration in the predetermined range include: a method in which the polyol having a carbon number of not greater than 4 is selected as the polyol component (b); and a method in which the proportion of the straight chain carboxylic acid compound (a1) as the polycarboxylic acid compound (a) is increased. These methods may be used in combination.

The ester group concentration (mmol/g) means the molar amount of ester bonds present in 1 g of the polyester resin, which is determined, for example, by calculation based on the amount of a fed ingredient. In the calculation, a smaller one of the fed molar amount of the polycarboxylic acid compound (a) and the fed molar amount of the polyol component (b) is divided by the overall weight of the resulting polyester resin. Exemplary calculation formulae are shown below. Where the polyester is prepared by using a monomer having both the carboxylic acid group and the hydroxyl group or prepared from caprolactone or the like, the calculation method is properly modified.

<Where the amount of the polycarboxylic acid compound (a) is smaller>

$$\text{Ester group concentration (mmol/g)} = \left[\frac{(A1/a1 \times m1 + A2/a2 \times m2 + A3/a3 \times m3 \cdots)}{Z}\right]$$

$$\times\ 1000$$

A: The fed amount (g) of the polycarboxylic acid compound (a)
a: The molecular weight of the polycarboxylic acid compound (a)
m: The number of carboxyl groups present in each molecule of the polycarboxylic acid compound (a)
Z: The weight (g) of the resulting polyester

<Where the amount of the polyol component (b) is smaller>

$$\text{Ester group concentration (mmol/g)} = \left[ \frac{(B1/b1 \times n1 + B2/b2 \times n2 + B3/b3 \times n3 \cdots)}{Z} \right]$$

$\times 1000$

B: The fed amount (g) of the polyol component (b)
b: The molecular weight of the polyol component (b)
n: The number of hydroxyl groups present in each molecule of the polyol component (b)
Z: The weight (g) of the resulting polyester

The ester group concentration may be measured by a known method using NMR or the like.
In the present disclosure, the polyester resin (i) preferably has a bioplastic degree of not less than 60%, more preferably not less than 65%, still more preferably not less than 70%, particularly preferably not less than 80%. If the bioplastic degree of the polyester resin (i) is excessively low, the reduction in environmental load tends to be insufficient.
Further, the polyester resin (ii) preferably has a bioplastic degree of not less than 60%, more preferably not less than 65%, still more preferably not less than 70%, particularly preferably not less than 80%. If the bioplastic degree of the polyester resin (ii) is excessively low, the reduction in environmental load tends to be insufficient.
The upper limit of each of the bioplastic degrees described above is 100%. An exemplary method of adjusting the bioplastic degree in the predetermined range is to mainly use the plant-derived polycarboxylic acid compound and/or the plant-derived polyol component. Particularly, the plant-derived polycarboxylic acid compound is preferably used as the polycarboxylic acid compound (a) in order to efficiently increase the bioplastic degree.
The bioplastic degree of the polyester resin (i), (ii) is the percentage of carbon incorporated in the polyester resin (i), (ii) from a plant-derived material in the production of the polyester resin (i), (ii) with respect to total carbon contained in the polyester resin (i), (ii). The bioplastic degree is calculated in the following manner.
The bioplastic degree of the polyester resin (i), (ii) may be determined based on the weighted average of the bioplastic degrees of the polycarboxylic acid compound (a), the polyol component (b), and other components (e.g., a compound having a carboxyl group and a hydroxyl group in its molecule, and the like).

(Calculation Method)

<Where the polycondensation reaction is involved>

$$\text{Bioplastic degree (\%)} = M1/M2 \times 100$$

wherein M1 is the molar amount of carbon of the plant-derived monomers determined when calculating the molar ratio between the polycarboxylic acid compound (a) and the polyol component (b) on assumption that the molar ratio between the carboxyl group and the hydroxyl group is defined as 1:1 based on the molar ratio between the fed amount of the polycarboxylic acid compound (a) and the fed amount of the polyol component (b), and M2 is the total molar amount of carbon of the constituent monomers.

<Where the polycondensation reaction is not involved>

$$\text{Bioplastic degree (\%)} = M3/M2 \times 100$$

wherein M3 is the molar amount of carbon of the fed plant-derived monomers, and M2 is the total molar amount of carbon of the constituent monomers.

Further, the bioplastic degree can be determined by analyzing the composition ratio of the resin by NMR, and calculating (the carbon number of the plant-derived monomers)/(the total carbon number of the entire resin).

Further, the bioplastic degree may be measured by a method in conformity with ASTM D-6866 "Measurement of natural radiocarbon (C-14) concentration."

The polyester resin (i), (ii) preferably has a crystal fusion heat amount of not greater than 10 J/g, more preferably not greater than 5 J/g, still more preferably not greater than 2 J/g, as measured by means of a differential scanning calorimeter (DSC), and particularly preferably has no crystal fusion heat. If the crystal fusion heat amount is excessively great, the crystallinity tends to occur. This tends to result in poorer storage stability of a resin solution, in poorer low-temperature stability of an adhesive sheet, and in poorer adhesive properties.

The crystal fusion heat amount can be controlled in the predetermined range, for example, by using a polycarboxylic acid compound having an alkyl group in its side chain and/or a polyol component having an alkyl group in its side chain or by using three or more types of comonomers, preferably four or more types of comonomers.

The crystal fusion heat amount is the amount of energy consumed when a crystalline substance is heated to be fused, and is typically measured by means of the differential scanning calorimeter (DSC).

The polyester resin (i), (ii) preferably has a weight-average molecular weight of 2,000 to 500,000, more preferably 10,000 to 300,000, particularly preferably 50,000 to 150,000. If the weight-average molecular weight is excessively great, the handlability tends to be poorer, requiring a greater amount of a solvent to thereby increase the environmental load. If the weight-average molecular weight is excessively small, the adhesive properties tend to be poorer.

The weight-average molecular weight is based on standard polystyrene molecular weight, and is determined through measurement with high-performance liquid chromatograph (HLC-8320GPC available from Tosoh Corporation with the use of two columns TSKgel SuperMultipore HZ-M (each having an exclusion limit molecular weight of $2 \times 10^6$ and a theoretical plate number of 16,000 per column, and filled with a column packing material of styrene-divinylbenzene copolymer having a particle diameter of 4 $\mu$m) connected in series.

The polyester resin (i), (ii) has an acid value of not greater than 10 mg KOH/g for prevention of the hydrolysis and for improvement of the durability, more preferably not greater than 5 mg KOH/g, particularly preferably not greater than 2 mg KOH/g, especially preferably not greater than 1 mg KOH/g. If the acid value is excessively great, the durability tends to be poorer.

The acid value may be adjusted, for example, by increasing the proportion of the polyol component (b) or properly adjusting the reaction conditions in the esterification reaction or the ester exchange reaction. The lower limit of the acid value is typically 0 mg KOH/g.

The acid value of the polyester resin (i), (ii) is determined by neutralization titration in conformity with JIS K0070.

In the present disclosure, the term "acid value" means the amount of the carboxyl group contained in the polyester resin (i), (ii). The carboxyl group includes a carboxylate ion which results from the neutralization of the carboxyl group with a basic compound.

The polyester resin (i), (ii) preferably has a glass transition temperature (Tg) of -90°C to 20°C, particularly preferably -80°C to 0°C, more preferably -60°C to -20°C, especially preferably -50°C to -30°C. If the glass transition temperature (Tg) is excessively high, the resulting adhesive agent composition tends to be poorer in adherence. If the glass transition temperature is excessively low, the heat resistance and the cohesive force tend to be reduced.

The glass transition temperature may be adjusted, for example, by introducing an aromatic skeleton to the resin or by changing the length of an alkyl chain of the polycarboxylic acid compound or the glycol component.

The glass transition temperature (Tg) is measured with the use of a differential scanning calorimeter DSC Q20 available from TA Instruments Inc. The measurement temperature range is -90°C to 100°C, and the temperature increase rate is 10°C/minute.

The adhesive agent composition of the present disclosure preferably contains, for example, a hydrolysis inhibitor (iii), a crosslinking agent (iv), a urethanization catalyst (v), an antioxidant (vi), a tackifier resin (vii), and the like in addition to the polyester resin (i), (ii).

<Hydrolysis Inhibitor (iii)>

The hydrolysis inhibitor (iii) is contained in the adhesive agent composition in order to impart the composition with long-term durability.

A conventionally known hydrolysis inhibitor may be uses as the hydrolysis inhibitor (iii). For example, a compound which reacts to be bonded to a terminal carboxyl group of the polyester resin (i), (ii) is usable, and specific examples thereof include compounds containing a functional group such as carbodiimide group, epoxy group or oxazoline group. Of these, the carbodiimide-containing compound is preferred because of its higher effect for eliminating the catalytic activity of a proton of the terminal carboxyl group.

Typically, a known carbodiimide having one or more carbodiimide groups (-N=C=N-) in its molecule may be used as the carbodiimide-containing compound. In order to improve the durability in a high-temperature and high-humidity environment, a compound containing two or more carbodiimide groups in its molecule, i.e., a polyvalent carbodiimide compound, is preferred, and a compound containing not less than three carbodiimide groups in its molecule is particularly preferred. Further, a compound containing not less than five carbodiimide groups in its molecule is preferred, and a compound containing not less than seven carbodiimide groups in its molecule is especially preferred. However, the number of carbodiimide groups contained in the molecule of the carbodiimide-containing compound is typically not greater than 50. If the number of the carbodiimide groups is excessively great, the molecular structure has an excessively great size, thereby reducing the compatibility of the carbodiimide-containing compound. A high-molecular weight polycarbodiimide prepared by a decarbonation condensation reaction of a diisocyanate in the presence of a carbodiimidization catalyst is also preferred as the carbodiimide-containing compound.

Further, terminal isocyanate groups of the high-molecular weight polycarbodiimide are preferably terminated with a terminal blocking agent from the viewpoint of storage stability. A compound having active hydrogen reactive with an isocyanate group or a compound having an isocyanate group is usable as the terminal blocking agent. Examples of the terminal blocking agent include monoalcohols, monocarboxylic acids, monoamines, and monoisocyanates containing one substituent selected from the group consisting of carboxyl group, amino group, and isocyanate group.

The following exemplary diisocyanates are usable as the diisocyanate to be subjected to the decarbonation condensation reaction for the preparation of the high-molecular weight polycarbodiimide.

The exemplary diisocyanates include 4,4'-diphenylmethane diisocyanate, 3,3'-dimethoxy-4,4'-diphenylmethane diisocyanate, 3,3'-dimethyl-4,4'-diphenylmethane diisocyanate, 4,4'-diphenyl ether diisocyanate, 3,3'-dimethyl-4,4'-diphenyl ether diisocyanate, 2,4-tolylene diisocyanate, 2,6-tolylene diisocyanate, 1-methoxyphenyl-2,4-diisocyanate, isophorone diisocyanate, 4,4'-dicyclohexylmethane diisocyanate, and tetramethylxylylene diisocyanate, which may be used alone or in combination. The high-molecular weight polycarbodiimide may be synthesized from any of these diisocyanates, or a commercially available product may be used as the high-molecular weight polycarbodiimide.

Examples of the commercially available product of the polycarbodiimide-containing compound include CARBODILITE (registered trade name) series available from Nisshinbo Chemical Inc. Of these, CARBODILITE (registered trade name) V-01, V-02B, V-03, V-04K, V-04PF, V-05, V-07, V-09, and V-09GB are particularly preferred because of their excellent compatibility with organic solvents.

A glycidyl ester compound and a glycidyl ether compound, for example, are preferred as the epoxy-containing compound.

Specific examples of the glycidyl ester compound include glycidyl benzoate, glycidyl t-butylbenzoate, glycidyl p-toluate, glycidyl cyclohexanecarboxylate, glycidyl pelargonate, glycidyl stearate, glycidyl laurate, glycidyl palmitate, glycidyl behenate, glycidyl versatate, glycidyl oleate, glycidyl linoleate, glycidyl linolenate, glycidyl behenolate, glycidyl stearolate, diglycidyl terephthalate, diglycidyl isophthalate, diglycidyl phthalate, diglycidyl naphthalenedicarboxylate, diglycidyl methylterephthalate, diglycidyl hexahydrophthalate, diglycidyl tetrahydrophthalate, diglycidyl cyclohexanedicarboxylate, diglycidyl adipate, diglycidyl succinate, diglycidyl sebacate, diglycidyl dodecanedioate, diglycidyl octadecanedicarboxylate, triglycidyl trimellitate, and tetraglycidyl pyromellitate, which may be used alone or in combination.

Specific examples of the glycidyl ether compound include phenyl glycidyl ether, o-phenyl glycidyl ether, 1,4-bis($\beta,\gamma$-epoxypropoxy)butane, 1,6-bis($\beta,\gamma$-epoxypropoxy)hexane, 1,4-bis($\beta,\gamma$-epoxypropoxy)benzene, 1-($\beta,\gamma$-epoxypropoxy)-2-ethoxyethane, 1-($\beta,\gamma$-epoxypropoxy)-2-benzyloxyethane, 2,2-bis[p-($\beta,\gamma$-epoxypropoxy)phenyl]propane, and bisglycidyl polyether prepared by a reaction between epichlorohydrin and bisphenol such as 2,2-bis(4-hydroxyphenyl)propane or 2,2-bis(4-hydroxyphenyl)methane. These may be used alone or in combination.

A bisoxazoline compound or the like is preferred as the oxazoline-containing compound. Specific examples of the bisoxazoline compound include 2,2'-bis(2-oxazoline), 2,2'-bis(4-methyl-2-oxazoline), 2,2'-bis(4,4-dimethyl-2-oxazoline), 2,2'-bis(4-ethyl-2-oxazoline), 2,2'-bis(4,4'-diethyl-2-oxazoline), 2,2'-bis(4-propyl-2-oxazoline), 2,2'-bis(4-butyl-2-oxazoline), 2,2'-bis(4-hexyl-2-oxazoline), 2,2'-bis(4-phenyl-2-oxazoline), 2,2'-bis(4-cyclohexyl-2-oxazoline), 2,2'-bis(4-benzyl-2-oxazoline), 2,2'-p-phenylenebis(2-oxazoline), 2,2'-m-phenylenebis(2-oxazoline), 2,2'-o-phenylenebis(2-oxazoline), 2,2'-p-phenylenebis(4-methyl-2-oxazoline), 2,2'-p-phenylenebis(4,4-dimethyl-2-oxazoline), 2,2'-m-phenylenebis(4-methyl-2-oxazoline), 2,2'-m-phenylenebis(4,4-dimethyl-2-oxazoline), 2,2'-ethylenebis(2-oxazoline), 2,2'-tetramethylenebis(2-oxazoline), 2,2'-hexamethylenebis(2-oxazoline), 2,2'-octamethylenebis(2-oxazoline), 2,2'-decamethylenebis(2-oxazoline), 2,2'-ethylenebis(4-methyl-2-oxazoline), 2,2'-tetramethylenebis(4,4-dimethyl-2-oxazoline), 2,2'-9,9'-diphenoxyethanebis(2-oxazoline), 2,2'-cyclohexylenebis(2-oxazoline), and 2,2'-diphenylenebis(2-oxazoline). Of these, 2,2'-bis(2-oxazoline) is most preferred from the viewpoint of the reactivity with the polyester resin (i), (ii). These may be used alone or in combination.

The hydrolysis inhibitor (iii) preferably has a lower volatility and, therefore, preferably has a higher number-average molecular weight. The number-average molecular weight of the hydrolysis inhibitor (iii) is typically 300 to 10,000, preferably 1,000 to 5,000.

From the viewpoint of the hydrolysis resistance, the hydrolysis inhibitor (iii) preferably has a higher weight-average molecular weight. The weight-average molecular weight of the hydrolysis inhibitor (iii) is preferably not less than 500, more preferably not less than 2,000, still more preferably not less than 3,000. The upper limit of the weight-average molecular weight is typically 50,000.

If the molecular weight of the hydrolysis inhibitor (iii) is excessively small, the hydrolysis resistance tends to be reduced. If the molecular weight of the hydrolysis inhibitor (iii) is excessively great, the compatibility with the polyester resin (i), (ii) tends to be reduced.

Of the hydrolysis inhibitors described above, the carbodiimide-containing compound is preferably used as the hydrolysis inhibitor (iii). In this case, the carbodiimide equivalent is preferably 50 to 10,000, particularly preferably 100 to 1,000, more preferably 150 to 500. The term "carbodiimide equivalent" means a chemical formula weight per one carbodiimide group.

The proportion of the hydrolysis inhibitor (iii) is preferably 0.01 to 10 parts by weight, particularly preferably 0.1 to 5 parts by weight, more preferably 0.2 to 3 parts by weight, based on 100 parts by weight of the polyester resin (i), (ii). If the proportion of the hydrolysis inhibitor (iii) is excessively great, the compatibility with the polyester resin (i), (ii) tends to be poorer, resulting in turbidity. If the proportion of the hydrolysis inhibitor (iii) is excessively small, it tends to be difficult to ensure sufficient durability.

The proportion of the hydrolysis inhibitor (iii) is preferably optimized according to the acid value of the polyester resin (i), (ii). The molar ratio (y)/(x) of the total molar amount (y) of the functional groups of the hydrolysis inhibitor (iii) in the adhesive agent composition to the total molar amount (x) of the acidic functional groups of the polyester resin (i), (ii) in the adhesive agent composition is preferably $0.5 \leq$ (y)/(x), particularly preferably $1 \leq$ (y)/(x) $\leq 1,000$, more preferably $1.5 \leq$ (y) / (x) $\leq 100$.

If the molar ratio (y)/(x) is excessively small, the moist heat resistance tends to be reduced. If the molar ratio (y)/(x) is excessively great, the compatibility with the polyester resin (i), (ii), the adhesive force, the cohesive force, and the durability tend to be reduced.

<Crosslinking Agent (iv)>

In the present disclosure, the adhesive agent composition preferably further contains the crosslinking agent (iv). The use of the crosslinking agent (iv) makes it possible to crosslink the polyester resin (i), (ii) with the crosslinking agent (iv) to impart the polyester resin (i), (ii) with excellent cohesive force, thereby improving the properties of the adhesive agent.

Examples of the crosslinking agent (iv) include compounds having a functional group reactive with a hydroxyl group and/or a carboxyl group of the polyester resin (i), (ii) such as polyisocyanate compound and polyepoxy compound. A polyfunctional acrylic monomer and a urethane acrylate oligomer are also usable, which are not reactive with the polyester resin (i), (ii) but improve the cohesive force. Of these, the polyisocyanate compound is preferred because the initial adhesiveness, the mechanical strength, and the heat resistance can be properly balanced.

Examples of the polyisocyanate compound include polyisocyanates such as tetramethylene diisocyanate, hexamethylene diisocyanate, isophorone diisocyanate, tolylene diisocyanate, diphenylmethane diisocyanate, hydrogenated diphenylmethane diisocyanate, xylylene diisocyanate, hydrogenated xylylene diisocyanate, tetramethylxylylene diisocyanate, 1,5-naphthalene diisocyanate, and triphenylmethane triisocyanate, adducts of any of these polyisocyanates and a polyol compound such as trimethylolpropane, and biuret compounds and isocyanurate compounds of any of these polyisocyanates. The polyisocyanate compound to be used may have an isocyanate portion blocked with phenol or lactam. These crosslinking agents may be used alone or in combination as the crosslinking agent (iv).

The proportion of the crosslinking agent (iv) may be properly selected according to the molecular weight of the polyester resin (i), (ii) and the use purpose. The proportion of the crosslinking agent (iv) is preferably such that a reactive group is present in the crosslinking agent (iv) in 0.2 to 10 equivalents, particularly preferably 0.5 to 5 equivalents, more preferably 0.5 to 3 equivalents, per equivalent of the hydroxyl group and/or the carboxyl group contained in the polyester resin (i), (ii). If the equivalent amount of the reactive group present in the crosslinking agent (iv) is excessively small, the cohesive force tends to be reduced. If the equivalent amount of the reactive group present in the crosslinking agent (iv) is excessively great, the flexibility tends to be reduced.

The proportion of the crosslinking agent (iv) is preferably 0.01 to 10 parts by weight, particularly preferably 0.1 to 8 parts by weight, more preferably 0.5 to 6 parts by weight, especially preferably 1 to 4 parts by weight, based on 100 parts by weight of the polyester resin (i), (ii).

If the proportion of the crosslinking agent is small, the cohesive force tends to be reduced. If the proportion of the crosslinking agent is excessively great, the flexibility tends to be reduced, making it impossible to provide a required adhesive force.

In the reaction between the polyester resin (i), (ii) and the crosslinking agent (iv), an organic solvent not having a functional group reactive with the polyester resin (i), (ii) and the crosslinking agent (iv) may be used. Examples of the organic solvent include esters such as ethyl acetate and butyl acetate, ketones such as methyl ethyl ketone and methyl isobutyl ketone, and aromatic compounds such as toluene and xylene, which may be used alone or in combination.

<Urethanization Catalyst (v)>

In the present disclosure, the adhesive agent composition more preferably further contains the urethanization catalyst (v) from the viewpoint of the reaction rate.

Examples of the urethanization catalyst (v) include organic metal compound and tertiary amine compound, which may be used alone or in combination.

Examples of the organic metal compound include zirconium compound, iron compound, tin compound, titanium compound, lead compound, cobalt compound, and zinc compound.
Examples of the zirconium compound include zirconium naphthenate and zirconium acetylacetonate.
Examples of the iron compound include iron acetylacetonate and iron 2-ethylhexanoate.
Examples of the tin compound include dibutyltin dichloride, dibutyltin oxide, and dibutyltin dilaurate.
Examples of the titanium compound include dibutyltitanium dichloride, tetrabutyl titanate, and butoxytitanium trichloride.
Examples of the lead compound include lead oleate, lead 2-ethylhexanoate, lead benzoate, and lead naphthenate.
Examples of the cobalt compound include cobalt 2-ethylhexanoate and cobalt benzoate.
Examples of the zinc compound include zinc naphthenate and zinc 2-ethylhexanoate.
Examples of the tertiary amine compound include triethylamine, triethylenediamine, and 1,8-diazabicyclo-(5,4,0)-undecene-7.
Of these urethanization catalysts, the organic metal compounds are preferred as the urethanization catalyst (v) from the viewpoint of the reaction rate and the pot life of the adhesive agent layer. Particularly, the zirconium compounds are preferred. The urethanization catalyst (v) is preferably used in combination with acetylacetone as a catalyzation inhibitor. The use of acetylacetone advantageously suppresses the catalyzation at a lower temperature to thereby increase the pot life.
The proportion of the urethanization catalyst (v) is preferably 0.0001 to 1 part by weight, particularly preferably 0.001 to 0.1 part by weight, more preferably 0.01 to 0.05 parts by weight, based on 100 parts by weight of the polyester resin (i), (ii). If the proportion of the urethanization catalyst (v) is excessively small, an aging period required for completion of the crosslinking reaction tends to be increased. If the proportion of the urethanization catalyst (v) is excessively great, the adhesive properties tend to be poorer.

<Antioxidant (vi)>

In the present disclosure, the adhesive agent composition more preferably further contains the antioxidant (vi) for improvement of the stability of the resin.
Examples of the antioxidant (vi) include hindered phenol antioxidant, amine antioxidant, sulfur antioxidant, and phosphoric acid antioxidant. Particularly, at least one selected from the group consisting of the hindered phenol antioxidant, the amine antioxidant, and the phosphoric acid antioxidant is preferred as the antioxidant (vi), and a hindered phenol compound antioxidant is particularly preferred as the antioxidant (vi).
An example of the hindered phenol antioxidant is an antioxidant having a hindered phenol structure such that a sterically hindering group (e.g., t-butyl group) is bonded to at least one of carbon atoms next to a carbon atom of an aromatic ring to which a phenolic hydroxyl group is bonded.
The proportion of the antioxidant (vi) is preferably 0.01 to 10 parts by weight, more preferably 0.03 to 8 parts by weight, still more preferably 0.05 to 5 parts by weight, based on 100 parts by weight of the polyester resin (i), (ii).
If the proportion of the antioxidant (vi) is excessively small, an adhesive residue is liable to adhere to an adherend. If the proportion of the antioxidant (vi) is excessively great, the adhesive properties tend to be poorer.

<Tackifier Resin (vii)>

In the present disclosure, the adhesive agent composition preferably further contain the tackifier resin (vii) for improvement of the adhesive properties.
The tackifier resin (vii) is not particularly limited, but conventionally known tackifier resins are usable as the tackifier resin (vii). Examples of the tackifier resin (vii) include hydrocarbon tackifier resin, terpene resin, phenol resin, rosin resin, xylene resin, epoxy resin, polyamide resin, ketone resin, and elastomer resin, which may be used alone or in combination. Of these, the hydrocarbon tackifier resin, the terpene resin, and the rosin resin are preferred for enhancement of the adhesive properties. From the viewpoint of the stability of the adhesive agent, the tackifier resin (vii) particularly preferably includes at least one selected from the group consisting of the hydrocarbon tackifier resin and the terpene resin. The terpene resin is particularly preferred in order to satisfy the requirements for a higher bioplastic degree and excellent properties. The proportion of the terpene resin is preferably not less than 30 wt.%, more preferably not less than 50 wt.%, still more preferably not less than 70 wt.%, based on the overall amount of the tackifier resin.

Examples of the hydrocarbon tackifier resin include hydrocarbon resins such as aliphatic hydrocarbon resin, aromatic hydrocarbon resin, alicyclic hydrocarbon resin, aliphatic/aromatic petroleum resin (styrene-olefin copolymer and the like), aliphatic/alicyclic petroleum resin, hydrogenated hydrocarbon resin, coumarone resin, and coumarone indene resin. Exemplary commercially available products of the hydrocarbon tackifier resin include FTR6100, FTR6110, and FTR6125 available from Mitsui Chemicals, Inc.

Examples of the terpene resin include polyterpene resin, terpene phenol resin, and aromatic modified polyterpene resin. Specific examples of the terpene resin include α-pinene polymer, β-pinene polymer, dipentene polymer, and modified terpene resins prepared by phenol modification, aromatic modification, hydrogenation modification, and hydrocarbon modification of any of these polymers. Particularly, the polyterpene resin is preferred because of its higher adhesive force after 24 hours. The terpene phenol resin is also preferred because of its higher adhesive force with respect to olefins. Exemplary commercially available products of the terpene resin include YS POLYSTAR S145, YS RESIN PX1000, YS RESIN PX1250, YS POLYSTAR T145, TS RESIN TO115, YS POLYSTAR U130, and CLEARON P125 available from Yasuhara Chemical Co., Ltd.

Examples of the phenol resin include condensation products of phenol compounds such as phenol, m-cresol, 3,5-xylenol, p-alkylphenol, and resorcinol with formaldehyde. Other examples of the phenol resin include resol prepared by addition reaction of any of the phenol compounds with formaldehyde in the presence of an alkali catalyst, novolak prepared by condensation reaction of any of the phenol compounds with formaldehyde in the presence of an acid catalyst, and rosin-modified phenol resin prepared by adding phenol to a rosin compound such as unmodified rosin, modified rosin, or derivative of any of these rosins in the presence of an acid catalyst, and performing thermal polymerization.

Examples of the rosin resin include rosin, polymerized rosin resin, hydrogenated rosin resin, rosin ester resin, hydrogenated rosin ester resin, rosin phenol resin, and polymerized rosin ester. Specific examples of the rosin resin include unmodified rosins (raw rosins) such as gum rosin, wood rosin, and tall oil rosin, chemically modified rosins prepared by hydrogenation, disproportionation, and polymerization of any of these unmodified rosins, and derivatives of any of these rosins. Exemplary commercially available products of the rosin resin include HARIESTER TF, HARITACK 8LJA, HARITACK PH, HARITACK FK100, and HARITACK PCJ available from Harima Chemicals Group, Inc.

The tackifier resin (vii) preferably has an acid value of not greater than 30 mg KOH/g, particularly preferably not greater than 10 mg KOH/g, more preferably not greater than 3 mg KOH/g, especially preferably not greater than 1 mg KOH/g. Where plural types of tackifier resins are used in combination, an average acid value of the tackifier resins preferably falls within the aforementioned range.

The tackifier resin (vii) preferably has a softening point of 80°C to 170°C, particularly preferably 85°C to 160°C, more preferably 95°C to 150°C (as measured, for example, by a ring and ball method). Where the tackifier resin (vii) has a softening point falling within the aforementioned range, the adhesive properties (adhesive force and cohesive force) can be advantageously improved.

In the present disclosure, the tackifier resin (vii) is preferably a plant-derived tackifier resin so that the adhesive agent can have a higher bioplastic degree as a whole. Examples of the plant-derived tackifier resin include the terpene resin and the rosin resin.

The proportion of the tackifier resin (vii) is preferably 2 to 100 parts by weight, more preferably 5 to 80 parts by weight, still more preferably 6 to 50 parts by weight, particularly preferably 8 to 30 parts by weight, especially preferably 9 to 20 parts by weight, based on 100 parts by weight of the polyester resin (i), (ii). If the proportion of the tackifier resin (vii) is excessively great, the adhesive agent layer tends to be excessively hard, thereby reducing the adherence. If the proportion of the tackifier resin (vii) is excessively small, it tends to be difficult to ensure the effect of adding the tackifier resin (vii).

In the present disclosure, the adhesive agent composition contains the polyester resin (i) or (ii), the hydrolysis inhibitor (iii), the crosslinking agent (iv), the urethanization catalyst (v), the antioxidant (vi), and the tackifier resin (vii), and may further contain additives such as softener, UV absorber, stabilizer, and antistatic agent, as long as the effects of the present disclosure are not impaired. Other examples of the additives include powdery and particulate additives such as inorganic and organic fillers, metal powder, and pigment. These components for the adhesive agent may each contain a very small amount of impurity attributable to production ingredients.

These additives may be used alone or in combination.

The adhesive agent of the present disclosure is produced by crosslinking the adhesive agent composition.

Further, the adhesive agent of the present disclosure preferably has a bioplastic degree of not less than 60%, more preferably not less than 65%, still more preferably not less than 70%, particularly preferably not less than 80%. The bioplastic degree of the adhesive agent can be adjusted by adjusting the proportion of the polyester resin (i), (ii), and the types and the proportions of the other components.

The bioplastic degree of the adhesive agent can be determined based on a weighted average of the bioplastic degree of the polyester resin determined by the aforementioned method and the bioplastic degrees of the other components in consideration of the percentages of the biobased carbon contained in the other components.

The bioplastic degree of the adhesive agent may be determined by the aforementioned method using the NMR or in conformity with ASTM D-6866 "Measurement of Natural Radiocarbon (C-14) Concentration."

The adhesive agent of the present disclosure produced by crosslinking the adhesive agent composition typically has an adhesive force ($\alpha$) of not less than 1 N/25 mm, more preferably 5 to 100 N/25 mm, still more preferably 7 to 50 N/25 mm, particularly preferably 9 to 30 N/25 mm, as measured as a 180-degree peel strength (N/25 mm) by forming an adhesive agent layer of the adhesive agent on a substrate to provide an adhesive sheet, bonding the adhesive sheet to an adherend of a bright annealed stainless steel plate, allowing the resulting structure to stand still in an environment at 23°C at 50%RH for 30 minutes, and peeling the adhesive sheet from the adherend at a peel rate of 300 mm/minute.

The adhesive sheet of the present disclosure includes an adhesive agent layer containing the adhesive agent. The adhesive agent layer is preferably provided on one surface or opposite surfaces of a support substrate.

In the present disclosure, the term "sheet" means to include film and tape.

<Adhesive Sheet>

The adhesive sheet can be produced, for example, in the following manner.

A known adhesive sheet production method may be employed for the production of the adhesive sheet. The production of the adhesive sheet is achieved, for example, by applying the adhesive agent composition onto a substrate, drying the resulting adhesive agent composition layer, applying a release sheet on an opposite surface of the adhesive agent composition layer, and aging the adhesive agent composition layer as required. Thus, the adhesive sheet of the present disclosure is produced which has the adhesive agent layer containing the adhesive agent on the substrate.

Alternatively, the production of the adhesive sheet of the present disclosure may be achieved by applying the adhesive agent composition onto a release sheet, drying the resulting adhesive agent composition layer, applying a substrate on an opposite surface of the adhesive agent composition layer, and aging the adhesive agent composition layer as required.

Further, a substrateless double-sided adhesive sheet can be produced by forming an adhesive agent layer on a release sheet, and applying another release sheet on an opposite surface of the adhesive agent layer.

When the adhesive sheet or the substrateless double-sided adhesive sheet is used, the release sheet is removed from the adhesive agent layer, which is bonded to an adherend.

Examples of the substrate include: sheets made of synthetic resins including polyester resins such as polyethylene naphthalate, polyethylene terephthalate, polybutylene terephthalate, and polyethylene terephthalate/isophthalate copolymers, polyolefin resins such as polyethylene, polypropylene, and polymethylpentene, polyfluoroethylene resins such as polyvinyl fluoride, polyvinylidene fluoride, and polyfluoroethylene, polyamides such as nylon 6 and nylon 6,6, vinyl polymers such as polyvinyl chloride, polyvinyl chloride/vinyl acetate copolymers, ethylene/vinyl acetate copolymers, ethylene/vinyl alcohol copolymers, polyvinyl alcohol, and vinylon, cellulose resins such as cellulose triacetate and cellophane, acrylic resins such as polymethyl methacrylate, polyethyl methacrylate, polyethyl acrylate, and polybutyl acrylate, polystyrene, polycarbonate, polyarylate, polyimide, and cycloolefin polymers; and metal foils such as of aluminum, copper, and iron, paper sheets such as high-quality paper and glassine paper, and woven and nonwoven fabrics of glass fibers, natural fibers, and synthetic fibers. The substrate may be in the form of a single layer substrate including any one of these substrates, or may be in the form of a laminate including two or more of these substrates laminated together.

Of these, the polyethylene terephthalate substrate and the polyimide substrate are preferred, and the polyethylene terephthalate substrate is particularly preferred because of its excellent adhesiveness to the adhesive agent.

Foam substrates, e.g., foam sheets of synthetic resin foams such as polyurethane foam, polyethylene foam, and polyacrylate foam, are also usable as the substrate. Of these, the polyethylene foam and the polyacrylate foam are preferred because the conformability to the adherend and the adhesive strength can be properly balanced.

The substrate preferably has a thickness of, for example, 1 to 1,000 $\mu$m, particularly preferably 2 to 500 $\mu$m, more preferably 3 to 300 $\mu$m.

Usable examples of the release sheet include release sheets prepared, for example, by subjecting the sheets made of the synthetic resins, the paper sheets, and the woven and nonwoven fabrics described above as the substrate to a release treatment. A silicone release sheet is preferably used as the release sheet.

A coater such as gravure roll coater, reverse roll coater, kiss roll coater, dip roll coater, bar coater, knife coater, spray coater or comma coater may be used for the application of the adhesive agent composition.

For the aging treatment, the aging temperature is typically a room temperature (23°C) to 70°C, and the aging period is typically 1 to 30 days. Specifically, the aging treatment is performed, for example, at 23°C for 1 to 20 days, preferably at 23°C for 3 to 14 days or at 40°C for 1 to 10 days.

For the drying, the drying temperature is preferably 60°C to 140°C, particularly preferably 80°C to 120°C, and the drying period is preferably 0.5 to 30 minutes, particularly preferably 1 to 5 minutes.

The adhesive agent layer of the adhesive sheet or the substrateless double-sided adhesive sheet preferably has a thickness of 2 to 500 μm, particularly preferably 5 to 200 μm, more preferably 10 to 100 μm. If the thickness of the adhesive agent layer is excessively small, the adhesive force tends to be reduced. If the thickness of the adhesive agent layer is excessively great, it tends to be difficult to uniformly apply the adhesive agent composition, and the resulting adhesive agent composition film is liable to suffer from bubbling and other inconveniences. In consideration of the impact absorbing property, the thickness is preferably not less than 50 μm.

The thickness of the adhesive agent layer is determined by measuring the thickness of the entire adhesive sheet and the thicknesses of constituent layers of the adhesive sheet other than the adhesive agent layer by means of ID-C112B available from Mitutoyo Corporation, and subtracting the other constituent layer thicknesses from the entire adhesive sheet thickness thus measured.

The adhesive agent layer of the adhesive sheet has a gel fraction of not less than 10 wt.%, particularly preferably 20 to 80 wt.%, more preferably 25 to 70 wt.%, especially preferably 27 to 45 wt.%, from the viewpoint of the durability and the adhesive force. If the gel fraction is excessively low, the holding force tends to be reduced due to reduction in cohesive force. If the gel fraction is excessively high, the adhesive force tends to be reduced due to increase in cohesive force.

The gel fraction is an index of the crosslinking degree, and is calculated, for example, by the following method. An adhesive sheet (provided with no release sheet) which includes a polymer sheet (e.g., a PET film or the like) serving as a substrate and an adhesive agent layer formed on the polymer sheet is wrapped with a 200-mesh stainless steel wire net, and immersed in toluene at 23°C for 24 hours. The weight percentage of an insoluble component of the adhesive agent remaining in the wire net after the immersion with respect to the weight of the adhesive agent before the immersion is defined as the gel fraction. The weight of the substrate is preliminarily subtracted from the weight of the adhesive sheet.

As required, the adhesive sheet may be protected with a release sheet provided on an outer side of the adhesive agent layer. In the adhesive sheet with its adhesive agent layer provided on one side of the substrate, a surface of the substrate opposite from the adhesive agent layer may be release-treated, whereby the adhesive agent layer can be protected with the release-treated surface.

The adhesive agent of the present disclosure can be used for bonding various components. Particularly, the adhesive agent of the present disclosure can be used for a single-sided or double-sided adhesive sheet for bonding optical components, or for a single-sided or double-sided adhesive sheet for fixing components of mobile electronic apparatuses and for fixing electronic components.

EXAMPLES

The embodiments of the present disclosure will hereinafter be described more specifically by way of examples thereof. It should be understood that the present disclosure be not limited to these examples within the scope of the present disclosure. In the following examples, "parts" and "%" are based on weight.

The bioplastic degree, the ester group concentration, the crystal fusion heat amount, the weight-average molecular weight, the glass transition temperature, and the acid value of a polyester resin, and the gel fraction of an adhesive agent in each of the examples were measured by the methods previously described.

Polyester resins were produced in the following manner.

[Production Example 1: Production of Polyester Resin (i-1)]

First, 17.8 parts (0.45 mol) of sebacic acid and 61.4 parts (0.55 mol) of hydrogenated distilled dimer acid (PRIPOL 1009 available from Croda International Plc) as the polycarboxylic acid compound (a), 20.7 parts (1.7 mol) of ethylene glycol and 0.2 parts (0.0065 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i-1) was produced.

The polyester resin (i-1) thus produced had a bioplastic degree of 92%, an ester group concentration of 4.64 mmol/g, a crystal fusion heat amount of 0 J/g, a weight-average molecular weight of 58,000, a glass transition temperature (Tg) of -50°C, and an acid value of 0.4 mg KOH/g.

In Production Example 1, the sebacic acid and the hydrogenated distilled dimer acid were plant-derived ingredients, and the total percentage of the sebacic acid and the hydrogenated distilled dimer acid was 86% of the polyester resin (i-1).

[Production Example 2: Production of Polyester Resin (i-2)]

First, 84.3 parts (1.00 mol) of hydrogenated distilled dimer acid (PRIPOL 1009 available from Croda International Plc) as the polycarboxylic acid compound (a), 15.6 parts (1.7 mol) of ethylene glycol and 0.1 part (0.0065 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i-2) was produced.

The polyester resin (i-2) thus produced had a bioplastic degree of 95%, an ester group concentration of 3.36 mmol/g, a crystal fusion heat amount of 0 J/g, a weight-average molecular weight of 72,000, a glass transition temperature (Tg) of -47°C, and an acid value of 0.3 mg KOH/g.

In Production Example 2, the hydrogenated distilled dimer acid was a plant-derived ingredient, and the percentage of the hydrogenated distilled dimer acid was 90% of the polyester resin (i-2).

[Production Example 3: Production of Polyester Resin (i-3)]

First, 80.6 parts (1.00 mol) of hydrogenated distilled dimer acid (PRIPOL 1009 available from Croda International Plc) as the polycarboxylic acid compound (a), 19.1 parts (1.5 mol) of 1,4-butanediol and 0.3 parts (0.015 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i-3) was produced.

The polyester resin (i-3) thus produced had a bioplastic degree of 86%, an ester group concentration of 3.21 mmol/g, a crystal fusion heat amount of 0 J/g, a weight-average molecular weight of 71,000, a glass transition temperature (Tg) of -52°C, and an acid value of 0.3 mg KOH/g.

In Production Example 3, the hydrogenated distilled dimer acid was a plant-derived ingredient, and the percentage of the hydrogenated distilled dimer acid was 86% of the polyester resin (i-3).

[Production Example 4: Production of Polyester Resin (i-4)]

First, 80.3 parts (1.00 mol) of hydrogenated distilled dimer acid (PRIPOL 1009 available from Croda International Plc) as the polycarboxylic acid compound (a), 7.9 parts (0.90 mol) of ethylene glycol, 11.7 parts (0.80 mol) of neopentyl glycol, and 0.1 part (0.0065 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i-4) was produced.

The polyester resin (i-4) thus produced had a bioplastic degree of 91%, an ester group concentration of 3.25 mmol/g, a crystal fusion heat amount of 0 J/g, a weight-average molecular weight of 72,000, a glass transition temperature (Tg) of -47°C, and an acid value of 0.2 mg KOH/g.

In Production Example 4, the hydrogenated distilled dimer acid was a plant-derived ingredient, and the percentage of the hydrogenated distilled dimer acid was 87% of the polyester resin (i-4).

[Production Example 5: Production of Polyester Resin (i-5)]

First, 17.0 parts (0.45 mol) of sebacic acid and 58.5 parts (0.55 mol) of hydrogenated distilled dimer acid (PRIPOL 1009 available from Croda International Plc) as the polycarboxylic acid compound (a), 24.3 parts (2.1 mol) of ethylene glycol and 0.2 parts (0.0065 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i-5) was produced.

The polyester resin (i-5) thus produced had a bioplastic degree of 92%, an ester group concentration of 4.64 mmol/g, a crystal fusion heat amount of 0 J/g, a weight-average molecular weight of 97,000, a glass transition temperature (Tg) of -50°C, and an acid value of 0.1 mg KOH/g.

In Production Example 5, the sebacic acid and the hydrogenated distilled dimer acid were plant-derived ingredients, and the total percentage of the sebacic acid and the hydrogenated distilled dimer acid was 86% of the polyester resin (i-5).

[Production Example 6: Production of Polyester Resin (i-6)]

First, 84.3 parts (1.00 mol) of hydrogenated distilled dimer acid (PRIPOL 1009 available from Croda International Plc) as the polycarboxylic acid compound (a), 15.6 parts (1.7 mol) of ethylene glycol and 0.1 part (0.0065 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i-6) was produced.

The polyester resin (i-6) thus produced had a bioplastic degree of 95%, an ester group concentration of 3.36 mmol/g, a crystal fusion heat amount of 0 J/g, a weight-average molecular weight of 88,000, a glass transition temperature (Tg) of -47°C, and an acid value of 0.1 mg KOH/g.

In Production Example 6, the hydrogenated distilled dimer acid was a plant-derived ingredient, and the percentage of the hydrogenated distilled dimer acid was 90% of the polyester resin (i-6).

[Comparative Production Example 1: Production of Polyester Resin (i'-1)]

First, 49.2 parts (1.00 mol) of hydrogenated distilled dimer acid (PRIPOL 1009 available from Croda International Plc) as the polycarboxylic acid compound (a), 50.8 parts (1.09 mol) of dimer diol (PRIPOL 2033 available from Croda International Plc) as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 200°C, and an esterification reaction was allowed to proceed for 4 hours. Thereafter, the internal temperature was increased to 240°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i'-1) was produced.

The polyester resin (i'-1) thus produced had a bioplastic degree of 100%, an ester group concentration of 1.78 mmol/g, a crystal fusion heat amount of 0 J/g, a weight-average molecular weight of 33,000, a glass transition temperature (Tg) of -50°C, and an acid value of 0.1 mg KOH/g.

In Comparative Production Example 1, the hydrogenated distilled dimer acid and the dimer diol were plant-derived ingredients, and the total percentage of the hydrogenated distilled dimer acid and the dimer diol was 100% of the polyester resin (i'-1).

[Comparative Production Example 2: Production of Polyester Resin (i'-2)]

First, 9.6 parts (0.2 mol) of isophthalic acid and 46.8 parts (0.8 mol) of sebacic acid as the polycarboxylic acid compound (a), 27.1 parts (0.900 mol) of neopentyl glycol, 13.0 parts (0.500 mol) of 1,4-butanediol, 3.0 parts (0.087 mol) of 1,6-hexanediol, and 0.5 parts (0.013 mol) of trimethylolpropane as the polyol component (b), and 0.01 part of tetrabutyl titanate as the catalyst were fed into a reaction can provided with a heating apparatus, a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i'-2) was produced.

The polyester resin (i'-2) thus produced had a bioplastic degree of 56%, an ester group concentration of 7.7 mmol/g, a crystal fusion heat amount of 0 J/g, a weight-average molecular weight of 80,000, a glass transition temperature (Tg) of -49°C, and an acid value of 0.4 mg KOH/g.

In Comparative Production Example 2, the sebacic acid was a plant-derived ingredient, and the percentage of the sebacic acid was 52% of the polyester resin (i'-2).

[Comparative Production Example 3: Production of Polyester Resin (i'-3)]

First, 17.8 parts (0.45 mol) of sebacic acid and 61.2 parts (0.55 mol) of hydrogenated distilled dimer acid (PRIPOL 1006 available from Croda International Plc) as the polycarboxylic acid compound (a), 20.6 parts (1.387 mol) of 1,3-propanediol and 0.3 parts (0.013 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i'-3) was produced.
The polyester resin (i'-3) thus produced had a bioplastic degree of 100%, an ester group concentration of 4.49 mmol/g, a crystal fusion heat amount of 0 J/g, a weight-average molecular weight of 112,000, a glass transition temperature (Tg) of -56°C, and an acid value of 0.5 mg KOH/g.
In Comparative Production Example 3, the hydrogenated distilled dimer acid, the sebacic acid, and the 1,3-propanediol were plant-derived ingredients, and the total percentage of the hydrogenated distilled dimer acid and the sebacic acid was 83% of the polyester resin (i'-3).

[Comparative Production Example 4: Production of Polyester Resin (i'-4)]

First, 84.1 parts (1.00 mol) of hydrogenated distilled dimer acid (PRIPOL 1006 available from Croda International Plc) as the polycarboxylic acid compound (a), 15.6 parts (1.387 mol) of 1,3-propanediol and 0.3 parts (0.013 mol) of trimethylolpropane as the polyol component (b), and 0.01 part of tetrabutyl titanate as the catalyst were fed into a reaction can provided with a thermometer, a stirrer, a fractionating column, a nitrogen introduction tube, and a vacuum system. The internal temperature was gradually increased to 250°C, and an esterification reaction was allowed to proceed for 4 hours. Thereafter, the internal temperature was increased to 260°C, and 0.01 part of tetrabutyl titanate was fed as the catalyst into the reaction can. Then, the internal pressure was reduced to 1.33 hPa, and a polymerization reaction was allowed to proceed for 3 hours. Thus, a polyester resin (i'-4) was produced.
The polyester resin (i'-4) thus produced had a bioplastic degree of 100%, an ester group concentration of 3.28 mmol/g, a crystal fusion heat amount of 0 J/g, a weight-average molecular weight of 157,000, a glass transition temperature (Tg) of -52°C, and an acid value of 0.8 mg KOH/g.
In Comparative Production Example 4, the hydrogenated distilled dimer acid and the 1,3-propanediol were plant-derived ingredients, and the percentage of the hydrogenated distilled dimer acid was 88% of the polyester resin (i'-4).
The formulations and the properties of the polyester resins produced in the production examples are shown below in Tables 1 and 2.

Table 1

| | | Production Example 1 | Production Example 2 | Production Example 3 | Production Example 4 | Production Example 5 | Production Example 6 |
|---|---|---|---|---|---|---|---|
| | | i-1 | i-2 | i-3 | i-4 | i-5 | i-6 |
| Polycarboxylic acid compound (a) | | | | | | | |
| Hydrogenated distilled dimer acid | Fed (mol) | 0.55 | 1.00 | 1.00 | 1.00 | 0.55 | 1.00 |
| | Calculated (mol) | 0.55 | 1.00 | 1.00 | 1.00 | 0.55 | 1.00 |
| Sebacic acid | Fed (mol) | 0.45 | - | - | - | 0.45 | - |
| | Calculated (mol) | 0.45 | - | - | - | 0.45 | - |
| Isophthalic acid | Fed (mol) | - | - | - | - | - | - |
| | Calculated (mol) | - | - | - | - | - | - |
| Polyol component (b) | | | | | | | |
| Dimer diol | Fed (mol) | - | - | - | - | - | - |
| | Calculated (mol) | - | - | - | - | - | - |
| 1,3-propanediol | Fed (mol) | - | - | - | - | - | - |
| | Calculated (mol) | - | - | - | - | - | - |
| Ethylene glycol | Fed (mol) | 1.7 | 1.7 | - | 0.90 | 2.1 | 1.7 |
| | Calculated (mol) | 0.996 | 0.996 | - | 0.527 | 0.997 | 0.996 |
| 1,4-butanediol | Fed (mol) | - | - | 1.5 | - | - | - |
| | Calculated (mol) | - | - | 0.990 | - | - | - |
| Neopentyl glycol | Fed (mol) | - | - | - | 0.8 | - | - |
| | Calculated (mol) | - | - | - | 0.469 | - | - |

EP 3 960 826 A1

(continued)

| | | Production Example 1 | Production Example 2 | Production Example 3 | Production Example 4 | Production Example 5 | Production Example 6 |
|---|---|---|---|---|---|---|---|
| 1,6-hexanediol | Fed (mol) | - | - | - | - | - | - |
| | Calculated (mol) | - | - | - | - | - | - |
| Trimethylolpropane | Fed (mol) | 0.0065 | 0.0065 | 0.015 | 0.0065 | 0.0065 | 0.0065 |
| | Calculated (mol) | 0.004 | 0.004 | 0.010 | 0.004 | 0.003 | 0.004 |
| Percentage (%)* | | 86 | 90 | 86 | 87 | 86 | 90 |
| Bioplastic degree (%) | | 92 | 95 | 86 | 91 | 92 | 95 |
| Ester group concentration (mmol/g) | | 4.64 | 3.36 | 3.21 | 3.25 | 4.64 | 3.36 |
| Crystal fusion heat amount (J/g) | | 0 | 0 | 0 | 0 | 0 | 0 |
| Weight-average molecular weight (Mw) | | 58,000 | 72,000 | 71,000 | 72,000 | 97,000 | 88,000 |
| Glass transition temperature (Tg) (°C) | | -50 | -47 | -52 | -47 | -50 | -47 |
| Acid value (mg KOH/g) | | 0.4 | 0.3 | 0.3 | 0.2 | 0.1 | 0.1 |
| * Percentage of hydrogenated distilled dimer acid, sebacic acid, and dimer diol with respect to polyester resin. | | | | | | | |

Table 2

| | | Comparative Production Example 1 | Comparative Production Example 2 | Comparative Production Example 3 | Comparative Production Example 4 |
|---|---|---|---|---|---|
| | | i'-1 | i'-2 | i'-3 | i'-4 |
| Polycarboxylic acid compound (a) | | | | | |
| Hydrogenated distilled dimer acid | Fed (mol) | 1.00 | - | 0.55 | 1.00 |
| | Calculated (mol) | 1.00 | - | 0.55 | 1.00 |
| Sebacic acid | Fed (mol) | - | 0.8 | 0.45 | - |
| | Calculated (mol) | - | 0.8 | 0.45 | - |
| Isophthalic acid | Fed (mol) | - | 0.2 | - | - |
| | Calculated (mol) | - | 0.2 | - | - |
| Polyol component (b) | | | | | |
| Dimer diol | Fed (mol) | 1.09 | - | - | - |
| | Calculated (mol) | 1.09 | - | - | - |
| 1,3-propanediol | Fed (mol) | - | - | 1.387 | 1.387 |
| | Calculated (mol) | - | - | 0.991 | 0.991 |
| Ethylene glycol | Fed (mol) | - | - | - | - |
| | Calculated (mol) | - | - | - | - |
| 1,4-butanediol | Fed (mol) | - | 0.500 | - | - |
| | Calculated (mol) | - | 0.333 | - | - |
| Neopentyl glycol | Fed (mol) | - | 0.900 | - | - |
| | Calculated (mol) | - | 0.600 | - | - |
| 1,6-hexanediol | Fed (mol) | - | 0.087 | - | - |
| | Calculated (mol) | - | 0.058 | - | - |
| Trimethylolpropane | Fed (mol) | - | 0.013 | 0.013 | 0.013 |
| | Calculated (mol) | - | 0.009 | 0.009 | 0.009 |
| Percentage (%)* | | 100 | 52 | 83 | 88 |
| Bioplastic degree (%) | | 100 | 56 | 100 | 100 |
| Ester group concentration (mmol/g) | | 1.78 | 7.7 | 4.49 | 3.28 |
| Crystal fusion heat amount (J/g) | | 0 | 0 | 0 | 0 |
| Weight-average molecular weight (Mw) | | 33,000 | 80,000 | 112,000 | 157,000 |

(continued)

|  | Comparative Production Example 1 | Comparative Production Example 2 | Comparative Production Example 3 | Comparative Production Example 4 |
|---|---|---|---|---|
| Glass transition temperature (Tg) (°C) | -50 | -49 | -56 | -52 |
| Acid value (mg KOH/g) | 0.1 | 0.4 | 0.5 | 0.8 |
| * Percentage of hydrogenated distilled dimer acid, sebacic acid, and dimer diol with respect to polyester resin. | | | | |

The bioplastic degree, the ester group concentration, and the crystal fusion heat amount of each of the polyester resins (i-1) to (i-6) produced in the aforementioned production examples were confirmed to fall within the ranges specified in the present disclosure. Therefore, it was possible to use the polyester resins (i-1) to (i-6) as the polyester resin (i), (ii) for the adhesive agent composition of the present disclosure.

In contrast, the polyester resin (i'-2), which is an ordinary polyester resin for an adhesive agent, had an insufficient environmental load reducing effect with a bioplastic degree of about 56%.

Prior to production of adhesive agent compositions, the following ingredients were prepared.

[Hydrolysis Inhibitor (iii)]

- Carbodiimide compound (iii-1): CARBODILITE V-09GB (available from Nisshinbo Chemical Inc.)

[Crosslinking Agent (iv)]

- Isocyanate crosslinking agent (iv-1): CORONATE HX (available from Tosoh Corporation)
- Isocyanate crosslinking agent (iv-2): CORONATE L (available from Tosoh Corporation)

[Urethanization Catalyst (v)]

- Zirconium compound (v-1): ORGATIX ZC-150 (available from Matsumoto Fine Chemical Co., Ltd.) diluted to a solid concentration of 1% with acetylacetone

[Antioxidant (vi)]

- Hindered phenol antioxidant (vi-1): IRGANOX1010 (available from BASF SE)

[Tackifier Resin (vii)]

- Aromatic hydrocarbon resin (vii-1): FTR6100 (available from Mitsui Chemicals, Inc.) having a softening point of 95°C, an acid value of less than 0.1 mg KOH/g, and a bioplastic degree of 0%
- Polymerized rosin ester (vii-2): HARITACK PCJ (available from Harima Chemicals Group, Inc.) having a softening point of 118°C to 128°C, an acid value of less than 16 mg KOH/g, and a bioplastic degree of 88%
- Special rosin ester (vii-3): SUPERESTER A-100 (available from Arakawa Chemical Industries, Ltd.) having a softening point of 100°C, an acid value of less than 10 mg KOH/g, and a bioplastic degree of 99%
- Aromatic terpene (vii-4): YS RESIN T0115 (available from Yasuhara Chemical Co., Ltd.) having a softening point of 115°C, an acid value of 0 mg KOH/g, and a bioplastic degree of not less than 70%

- Terpene resin (vii-5): YS RESIN PX1000 (available from Yasuhara Chemical Co., Ltd.) having a softening point of 110°C, an acid value of 0 mg KOH/g, and a bioplastic degree of not less than 90%

Next, adhesive agent compositions and adhesive sheets according to Examples and Comparative Examples were produced by using the polyester resins (i-1) to (i-6) and (i'-1) to (i'-4) prepared in the aforementioned manner.

[Example 1]

The polyester resin (i-1) prepared in the aforementioned manner was diluted to a solid concentration of 50% with ethyl acetate, and blended and mixed with 1 part (on a solid basis) of the carbodiimide compound (iii-1), 2 parts of the isocyanate crosslinking agent (iv-2), 0.02 parts (on a solid basis) of the zirconium compound (v-1), and 0.1 part of the hindered phenol antioxidant (vi-1) with stirring. Thus, an adhesive agent composition was produced.

The adhesive agent composition thus produced was applied to a post-drying thickness of about 25 $\mu$m on a polyethylene terephthalate (PET) film (having a thickness of 38 $\mu$m), and then dried at 100°C for three minutes. Thus, an adhesive agent layer was formed. Thereafter, the surface of the adhesive agent layer was protected by applying a release-treated PET film (release film) onto the adhesive agent layer, and the adhesive agent layer was aged in an environment at a temperature of 40°C for 10 days. Thus, an adhesive sheet was produced.

[Examples 2 to 14 and Comparative Examples 1 to 7]

Adhesive agent compositions were prepared and adhesive sheets were produced in substantially the same manner as in Example 1, except that the formulations shown below in Table 3 were employed.

Table 3

| | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| Formulation | | | | | | | | | | | | |
| Polyester resin | | i-1 | i-1 | i-2 | i-1 | i-2 | i-2 | i-2 | i-3 | i-4 | i-5 | i-5 |
| Hydrolysis inhibitor* | iii-1 | 1 | 1 | 1 | 1 | 1 | 1 | 1 | 1 | 1 | 1 | 1 |
| Crosslinking agent* | iv-1 | – | – | – | – | – | – | – | – | – | – | – |
| | iv-2 | 2 | 3 | 2 | 2 | 2 | 3 | 3 | 2 | 2.5 | 1.2 | 1.1 |
| Urethanization catalyst* | v-1 | 0.02 | 0.02 | 0.02 | 0.02 | 0.02 | 0.02 | 0.02 | 0.02 | 0.02 | 0.02 | 0.02 |
| Antioxidant* | vi-1 | 0.1 | 0.1 | 0.1 | 0.1 | 0.1 | 0.1 | 0.1 | 0.1 | 0.1 | 0.1 | 0.1 |
| Tackifier resin* | vii-1 | – | – | – | 10 | 15 | – | – | – | – | – | – |
| | vii-2 | – | – | – | – | – | 10 | – | – | – | – | – |
| | vii-3 | – | – | – | – | – | – | 10 | – | – | – | – |
| | vii-4 | – | – | – | – | – | – | – | – | – | – | 10 |
| | vii-5 | – | – | – | – | – | – | – | – | – | – | – |
| Bioplastic degree (%) | | 89 | 88 | 92 | 81 | 81 | 81 | 91 | 83 | 88 | 90 | 88 |
| Gel fraction (%) | | 38 | 49 | 37 | 29 | 36 | 29 | 36 | 37 | 34 | 32 | 33 |

* Proportion (part) based on 100 parts on solid basis of polyester resin.

Table 3 (continued)

| | | Example 12 | Example 13 | Example 14 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|---|
| Formulation | | | | | | | | | | | |
| Polyester resin | | i-6 | i-6 | i-6 | i'-1 | i'-1 | i'-1 | i'-3 | i'-3 | i'-4 | i'-2 |
| Hydrolysis inhibitor* | iii-1 | 1 | 1 | 1 | 1 | 1 | 1 | 1 | 1 | 1 | 1 |
| Crosslinking agent* | iv-1 | – | – | – | 1 | 2 | 3 | – | – | – | 1 |
| | iv-2 | 1.5 | 1.1 | 1.3 | – | – | – | 2 | 3 | 2 | – |
| Urethanization catalyst* | v-1 | 0.02 | 0.02 | 0.02 | 0.02 | 0.02 | 0.02 | 0.02 | 0.02 | 0.02 | 0.02 |
| Antioxidant* | vi-1 | 0.1 | 0.1 | 0.1 | 0.1 | 0.1 | 0.1 | 0.1 | 0.1 | 0.1 | 0.1 |
| Tackifier resin* | vii-1 | – | – | – | – | – | – | – | – | – | – |
| | vii-2 | – | – | – | – | – | – | – | – | – | – |
| | vii-3 | – | – | – | – | – | – | – | – | – | – |
| | vii-4 | – | 10 | – | – | – | – | – | – | – | – |
| | vii-5 | – | – | 15 | – | – | – | – | – | – | – |
| Bioplastic degree (%) | | 93 | 91 | 92 | 98 | 97 | 96 | 97 | 96 | 97 | 55 |
| Gel fraction (%) | | 38 | 26 | 33 | 74 | 86 | 89 | 15 | 45 | 52 | 53 |

* Proportion (part) based on 100 parts on solid basis of polyester resin.

The resulting adhesive sheets of Examples 1 to 14 and Comparative Examples 1 to 7 were each evaluated in the following manner. The results of the evaluation are shown below in Table 4.

<Adhesive Force (Peel Strength) with respect to a bright annealed stainless steel plate >

A bright annealed stainless steel plate was prepared as an adherend. After the adhesive sheets produced in the aforementioned manner were each cut to a size of 25 mm × 200 mm in an environment at 23°C at 50%RH to provide a test sample, the release film was removed from the test sample. Then, the adhesive agent layer of the test sample was brought into contact with the bright annealed stainless steel plate, and press-bonded to the bright annealed stainless steel plate by reciprocally moving a 2-kg roller on the test sample. After the resulting test sample was allowed to stand still in the same environment for 30 minutes, a 180-degree peel strength (N/25 mm) was measured at a peel rate of 300 mm/minute by means of an autograph (AUTOGRAPH AGS-H 500N available from Shimadzu Corporation), and rated based on the following criteria:

○○ (excellent): Not less than 5 N/25 mm
○ (acceptable): Not less than 1 N/25 mm and less than 5 N/25 mm
× (unacceptable): Less than 1 N/25 mm

<Adhesive Force (Peel Strength) after 24 hours>

A bright annealed stainless steel plate was prepared as an adherend. After the adhesive sheets produced in the aforementioned manner were each cut to a size of 25 mm × 200 mm in an environment at 23°C at 50%RH to provide a test sample, the release film was removed from the test sample. Then, the adhesive agent layer of the test sample was brought into contact with the bright annealed stainless steel plate, and press-bonded to the bright annealed stainless steel plate by reciprocally moving a 2-kg roller on the test sample. After the resulting test sample was allowed to stand still in the same environment for 24 hours, a 180-degree peel strength (N/25 mm) was measured at a peel rate of 300 mm/minute by means of an autograph (AUTOGRAPH AGS-H 500N available from Shimadzu Corporation), and rated based on the following criteria:

○○ (excellent): Not less than 20 N/25 mm
○ (acceptable): Not less than 13 N/25 mm and less than 20 N/25 mm
× (unacceptable): Less than 13 N/25 mm

<Adhesive Force (Adhesive Strength) with respect to PP>

A polypropylene (PP) plate (PP (2.0 × 70 × 150 mm) available from Nippon Testpanel Co., Ltd.) was prepared as an adherend. After the adhesive sheets produced in the aforementioned manner were each cut to a size of 25 mm × 200 mm in an environment at 23°C at 50%RH to provide a test sample, the release film was removed from the test sample. Then, the adhesive agent layer of the test sample was brought into contact with the polypropylene (PP) plate, and press-bonded to the polypropylene (PP) plate by reciprocally moving a 2-kg roller on the test sample. After the resulting test sample was allowed to stand still in the same environment for 30 minutes, a 180-degree peel strength (N/25 mm) was measured at a peel rate of 300 mm/minute by means of an autograph (AUTOGRAPH AGS-H 500N available from Shimadzu Corporation), and rated based on the following criteria:

○○ (excellent): Not less than 10 N/25 mm
○ (acceptable): Not less than 6 N/25 mm and less than 10 N/25 mm
× (unacceptable): Less than 6 N/25 mm

<Holding Force (Cohesive Force)>

The adhesive sheets produced in the aforementioned manner were each evaluated in conformity with JIS Z0237 by using a SUS304 (stainless steel) plate as an adherend. The adhesive sheet was bonded to the SUS304 plate with a bonding area of 25 mm × 25 mm, and then allowed to stand still at 80°C for 20 minutes. While a load of 1 kg was applied to the adhesive sheet, time required for the adhesive sheet to drop was measured. Where the adhesive sheet did not drop in a 24-hour stand-still period, a displacement of the adhesive sheet was measured after the 24-hour stand-still period. The evaluation was based on the following criteria: ○ (excellent): The adhesive sheet did not drop in the 24-hour stand-still period.
× (unacceptable): The adhesive sheet dropped in the 24-hour stand-still period.

<Dent Resistance>

The adhesive agent compositions prepared in the aforementioned manner were each applied to a post-drying thickness of about 25 μm on a polyethylene terephthalate (PET) film (having a thickness of 38 μm) as a substrate, and then dried at 100°C for three minutes. Thus, an adhesive agent layer was formed. Thereafter, a release-treated PET film (release film) was applied onto the adhesive agent layer, and a 2-kg roller was placed on the adhesive agent layer from above the release film. After a 10-second stop period, the adhesive agent layer was visually inspected, and evaluated based on the following criteria:

○ (excellent): No change was observed.
× (unacceptable): A dent was formed on a portion of the adhesive agent layer on which the roller was placed.

<Processability>

The adhesive sheets produced in the aforementioned manner were each cut to a width of 25 mm by a cutter knife. Then, the cutter knife was visually inspected for adhesive residue adhering to a blade of the cutter knife. The adhesive sheet was evaluated based on the following criteria:

○ (excellent): The adhesive agent did not remain on the blade.

× (unacceptable): The adhesive agent remained on the blade.

<Transparency>

The release film was removed from the adhesive agent layer of each of the adhesive sheets produced in the aforementioned manner, and the exposed adhesive agent layer was bonded to an alkali-free glass plate (EAGLE XG available from Corning Inc.) Then, a test piece having a structure of PET film/adhesive agent layer/alkali-free glass plate was produced.
The haze of the adhesive sheet was determined by measuring the haze value of the test piece by means of a haze meter (HAZE MATER NDH2000 available from Nippon Denshoku Industries Co., Ltd.) and subtracting the haze value of the PET film from the haze value of the test piece, and rated based on the following criteria. The haze meter conforms to JIS K7361-1.

○ (excellent): The haze was not greater than 3.
Δ (acceptable): The haze was greater than 3 and not greater than 10.
× (unacceptable): The haze was greater than 10.

Table 4

| | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|
| Properties of adhesive sheet | | | | | | | | | | | |
| Adhesive force with respect to bright annealed stainless steel plate | | | | | | | | | | | |
| Peel strength (N/25 mm) | 14.4 | 9.8 | 13.1 | 16.9 | 15.4 | 19.1 | 15.8 | 14.2 | 17.7 | 11.6 | 13.2 |
| Rating | ○○ | ○○ | ○○ | ○○ | ○○ | ○○ | ○○ | ○○ | ○○ | ○○ | ○○ |
| Peel strength (N/25 mm) after 24 hours | 20.6 | 13.3 | 17 | 20.4 | 23 | 24.3 | 20.5 | 20.2 | 17.8 | 15.4 | 16.6 |
| Rating | ○○ | ○ | ○ | ○○ | ○○ | ○○ | ○○ | ○○ | ○ | ○ | ○ |
| Adhesive force with respect to PP | | | | | | | | | | | |
| Peel strength (N/25 mm) | 8.9 | 6.5 | 10.3 | 13.9 | 13.5 | 13.8 | 13 | 9.3 | 13.1 | 10.4 | 13.9 |
| Rating | ○ | ○ | ○○ | ○○ | ○○ | ○○ | ○○ | ○ | ○○ | ○○ | ○○ |
| Holding force (at 80°C) | | | | | | | | | | | |
| Drop time or displacement | 0 mm | 0 mm | 0 mm | 0.1 mm | 0 mm | 0.1 mm | 0 mm | 0 mm | 0.1 mm | 0.1 mm | 0 mm |
| Rating | ○ | ○ | ○ | ○ | ○ | ○ | ○ | ○ | ○ | ○ | ○ |
| Dent resistance | ○ | ○ | ○ | ○ | ○ | ○ | ○ | ○ | ○ | ○ | ○ |
| Processability | ○ | ○ | ○ | ○ | ○ | ○ | ○ | ○ | ○ | ○ | ○ |
| Transparency | | | | | | | | | | | |
| Haze | 0.3 | 0.5 | 1.7 | 0.1 | 0.9 | 1.2 | 1.4 | 6.6 | 8.4 | 1.1 | 0.4 |
| Rating | ○ | ○ | ○ | ○ | ○ | ○ | ○ | Δ | Δ | ○ | ○ |

EP 3 960 826 A1

Table 4 (continued)

| | Example 12 | Example 13 | Example 14 | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Properties of adhesive sheet | | | | | | | | | | |
| Adhesive force with respect to bright annealed stainless steel plate | | | | | | | | | | |
| Peel strength (N/25 mm) | 11.3 | 21.4 | 14.1 | 3.8 | 12 | 4.7 | 12.3 | 7.3 | 10.6 | 10.2 |
| Rating | ○○ | ○○ | ○○ | ○ | ○○ | ○ | ○○ | ○○ | ○○ | ○○ |
| Peel strength (N/25 mm) after 24 hours | 15.8 | 20.7 | 27 | 4.1 | 12.6 | 6.7 | 13.2 | 10.2 | 12 | 13.8 |
| Rating | ○ | ○○ | ○○ | × | × | × | ○ | × | × | ○ |
| Adhesive force with respect to PP | | | | | | | | | | |
| Peel strength (N/25 mm) | 10 | 19.1 | 13.1 | 3.6 | 9.4 | 2.8 | 4.2 | 5 | 5.6 | 2.5 |
| Rating | ○○ | ○○ | ○○ | × | ○ | × | × | × | × | × |
| Holding force (at 80°C) | | | | | | | | | | |
| Drop time or displacement | 0 mm | 0 mm | 0 mm | 0 min. | 0 mm | 0 mm | 2 min. | 0 mm | 0 mm | 0 mm |
| Rating | ○ | ○ | ○ | × | ○ | ○ | × | ○ | ○ | ○ |
| Dent resistance | ○ | ○ | ○ | × | × | × | ○ | ○ | ○ | ○ |
| Processability | ○ | ○ | ○ | × | × | × | ○ | ○ | ○ | ○ |
| Transparency | | | | | | | | | | |
| Haze | 9 | 7.4 | 7.8 | 16 | 17 | 17 | 0.5 | 0.7 | 4.6 | 0 |
| Rating | Δ | Δ | Δ | × | × | × | ○ | ○ | Δ | ○ |

The results shown in Table 4 indicate that the adhesive sheets of Examples 1 to 14 each have desired adhesive properties with respect not only to a metal adherend but also to a poor adhesion adherend such as of polyolefin resin, ensuring proper balance between the adhesive force and the holding force. The adhesive sheets of Examples 1 to 14 are excellent in dent resistance and processability when being slit into a narrow adhesive sheet strip in the production thereof. In addition, the adhesive sheets of Examples 1 to 14 are excellent in bonding processability and transparency. The adhesive sheets additionally containing the tackifier resin are more excellent in adhesive properties, and are also excellent in long-term adhesive properties.

In contrast, the adhesive agents of Comparative Examples 1 to 3, which were each produced by using the conventional polyester resin having a higher bioplastic degree, are unsatisfactory in adhesive properties. Further, the adhesive agent layers formed by using the adhesive agents of Comparative Examples 1 to 3 were excessively soft, and suffered from a dent. Thus, the adhesive agent layers are poorer in processibility and transparency. The adhesive agents of Comparative Examples 1 and 3 to 7, which were each produced by using the polyester resin prepared without the use of the glycol having an even carbon number as the polyol component, are insufficient in adhesive force with respect to the polyolefin resin, and are poorly balanced between the adhesive force and the holding force.

While specific forms of the embodiments of the present disclosure have been shown in the aforementioned examples, the examples are merely illustrative but not limitative. It is contemplated that various modifications apparent to those skilled in the art could be made within the scope of the disclosure.

The adhesive agent of the present disclosure is excellent in adhesive properties with respect to a variety of adherends such as metals and plastics, even if being produced by using a global environment-friendly plant-derived material and by using a polyester resin having a higher bioplastic degree. Further, the adhesive agent of the present disclosure is excellent in dent resistance and processability for adhesive sheet slitting, and has excellent transparency. The adhesive agent of the present disclosure can be used for a single-sided or double-sided adhesive sheet for bonding optical components, and for a single-sided or double-sided adhesive sheet for fixing components of mobile electronic apparatuses and fixing electronic components.

## Claims

1.   An adhesive agent comprising a crosslinked adhesive agent composition which comprises a polyester resin (i) having a structural portion derived from a polycarboxylic acid compound (a) and a structural portion derived from a polyol component (b),

   wherein not less than 60 wt.% of a total weight of the polyester resin (i) comprises a structural portion derived from at least one selected from the group consisting of a dimer acid compound, a sebacic acid compound, and a dimer diol,
   wherein the polyol component (b) comprises a glycol (b1) having an even carbon number, excluding the dimer diol, and
   wherein the polyester resin (i) has an ester group concentration of not less than 2 mmol/g,
   the adhesive agent having an adhesive force ($\alpha$) of not less than 1 N/25 mm as measured as a 180-degree peel strength (N/25 mm) by forming an adhesive agent layer of the adhesive agent on a substrate to provide an adhesive sheet, bonding the adhesive sheet to an adherend of a bright annealed stainless steel plate, allowing the resulting structure to stand still at 23°C at 50%RH for 30 minutes, and peeling the adhesive sheet from the adherend at a peel rate of 300 mm/minute.

2.   The adhesive agent according to claim 1, wherein the even carbon number glycol (b1) is an aliphatic glycol having a straight chain structure.

3.   The adhesive agent according to claim 1 or 2, wherein the polycarboxylic acid compound (a) comprises a straight chain carboxylic acid compound (a1) in a proportion of not greater than 70 mol %.

4.   The adhesive agent according to any one of claims 1 to 3, wherein the even carbon number glycol (b1) is present in a proportion of 10 to 100 mol % in the polyol component (b) .

5.   The adhesive agent according to any one of claims 1 to 4, wherein the even carbon number glycol (b1) is a polyol having a carbon number of not greater than 4.

6.   The adhesive agent according to any one of claims 1 to 5, wherein the polyester resin (i) has an acid value of not greater than 10 mg KOH/g.

7. The adhesive agent according to any one of claims 1 to 6, wherein the polyester resin (i) has a bioplastic degree of not less than 60%.

8. An adhesive agent comprising a crosslinked adhesive agent composition which comprises a polyester resin (ii) having a bioplastic degree of not less than 60%,

   wherein the polyester resin (ii) has a structural portion derived from a polycarboxylic acid compound (a) and a structural portion derived from a polyol component (b), and the polyol component (b) comprises a glycol (b1) having an even carbon number, excluding a dimer diol, and
   wherein the polyester resin (ii) has an ester group concentration of not less than 2 mmol/g,
   the adhesive agent having an adhesive force ($\alpha$) of not less than 1 N/25 mm as measured as a 180-degree peel strength (N/25 mm) by forming an adhesive agent layer of the adhesive agent on a substrate to provide an adhesive sheet, bonding the adhesive sheet to an adherend of a bright annealed stainless steel plate, allowing the resulting structure to stand still at 23°C at 50%RH for 30 minutes, and then peeling the adhesive sheet from the adherend at a peel rate of 300 mm/minute.

9. The adhesive agent according to any one of claims 1 to 8, wherein the adhesive agent composition further comprises a hydrolysis inhibitor (iii).

10. The adhesive agent according to any one of claims 1 to 9, wherein the adhesive agent composition further comprises a crosslinking agent (iv).

11. The adhesive agent according to any one of claims 1 to 10, wherein the adhesive agent composition further comprises a tackifier resin (vii).

12. The adhesive agent according to any one of claims 1 to 11, which has a bioplastic degree of not less than 60%.

13. The adhesive agent according to any one of claims 1 to 12, which is used for bonding a component.

14. An adhesive sheet comprising an adhesive agent layer comprising the adhesive agent according to any one of claims 1 to 13.

## INTERNATIONAL SEARCH REPORT

International application No.

PCT/JP2020/016806

### A. CLASSIFICATION OF SUBJECT MATTER
Int. Cl. C09J11/06(2006.01)i, C09J11/08(2006.01)i, C09J167/00(2006.01)i, C09J7/38(2018.01)i, C08C63/12(2006.01)i
FI: C09J167/00 ZBP, C09J7/38, C09J11/06, C09J11/08, C08C63/12
According to International Patent Classification (IPC) or to both national classification and IPC

### B. FIELDS SEARCHED

Minimum documentation searched (classification system followed by classification symbols)
Int. Cl. C09J11/06, C09J11/08, C09J167/00, C09J7/38, C08C63/12

Documentation searched other than minimum documentation to the extent that such documents are included in the fields searched
Published examined utility model applications of Japan     1922-1996
Published unexamined utility model applications of Japan   1971-2020
Registered utility model specifications of Japan           1996-2020
Published registered utility model applications of Japan   1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2015-196822 A (NITTO DENKO CORP.) 09 November 2015, paragraphs [0049], [0073], [0084], example 8, paragraphs [0035], [0049], [0051]-[0063] | 1-14 |
| Y | | 8-14 |
| X | JP 2012-36278 A (NITTO DENKO CORP.) 23 February 2012, paragraphs [0040]-[0042], [0045]-[0049], examples 1-5, paragraphs [0040]-[0042], [0045]-[0049], examples 1-5 | 1-8, 10, 12-14 |
| Y | | 9, 11 |
| Y | JP 2012-107175 A (FUJIFILM CORP.) 07 June 2012, paragraphs [0008], [0061], [0165], [0204] | 8-14 |
| A | JP 2015-134906 A (NITTO DENKO CORP.) 27 July 2015, entire text, all drawings | 1-14 |

☒ Further documents are listed in the continuation of Box C.     ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 09.06.2020 | 23.06.2020 |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**EP 3 960 826 A1**

**INTERNATIONAL SEARCH REPORT**

| International application No. |
| --- |
| PCT/JP2020/016806 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 2011-88961 A (NITTO DENKO CORP.) 06 May 2011, entire text | 1-14 |

Form PCT/ISA/210 (continuation of second sheet) (January 2015)

**INTERNATIONAL SEARCH REPORT**

Information on patent family members

International application No.

PCT/JP2020/016806

| Patent Documents referred to in the Report | Publication Date | Patent Family | Publication Date |
|---|---|---|---|
| JP 2015-196822 A | 09.11.2015 | US 2017/0029675 A1<br>paragraphs [0040],<br>[0054], [0056]-[0070],<br>[0089], [0101],<br>example 8 | |
| JP 2012-36278 A | 23.02.2012 | (Family: none) | |
| JP 2012-107175 A | 07.06.2012 | US 2013/0022907 A1<br>paragraphs [0013],<br>[0092], [0234], [0279] | |
| JP 2015-134906 A | 27.07.2015 | US 2016/0312073 A1<br>entire text, all<br>drawings | |
| JP 2011-88961 A | 06.05.2011 | US 2012/0208955 A1<br>entire text | |

Form PCT/ISA/210 (patent family annex) (January 2015)

**EP 3 960 826 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007308626 A

- JP 2010037463 A